# EUROPÄISCHE PATENTSCHRIFT

(11) **EP 3 573 034 B1**
(45) Veröffentlichungstag und Bekanntmachung des Hinweises auf die Patenterteilung: **07.04.2021**
(21) Anmeldenummer: 18173734.7
(22) Anmeldetag: 23.05.2018
(51) Int. Cl.: G08C 19/02, H04W 76/10

(54) **AUFBAU EINES DRAHTLOSEN KOMMUNIKATIONSPFADES ZWISCHEN EINER ERSTEN VORRICHTUNG FÜR EIN NUTZFAHRZEUG UND EINER ZWEITEN VORRICHTUNG**
ESTABLISHMENT OF A WIRELESS COMMUNICATION LINK BETWEEN A FIRST DEVICE FOR A COMMERCIAL VEHICLE AND A SECOND DEVICE
ÉTABLISSEMENT D'UNE VOIE DE COMMUNICATION SANS FIL ENTRE UN PREMIER DISPOSITIF POUR UN VÉHICULE UTILITAIRE ET UN SECOND DISPOSITIF

(43) Veröffentlichungstag der Anmeldung: 27.11.2019
(73) Patentinhaber: Schmitz Cargobull AG, 48341 Altenberge (DE)
(72) Erfinder: Schulte-Jokiel, Nils, 48147 Münster (DE)
(74) Vertreter: Cohausz & Florack

(56) Entgegenhaltungen:
- EP-A1- 3 300 406
- US-A1- 2014 213 238
- US-B1- 9 846 979
- HP: "HP DeskJet 2600 All-in-One series", , 25. April 2018 (2018-04-25), Seite 1,76, XP002785309, Gefunden im Internet: URL:http://h10032.www1.hp.com/ctg/Manual/c 05439344 [gefunden am 2018-10-02]
- HP: "HP Customer Support - Software and Driver Downloads", , 25. April 2018 (2018-04-25), Seiten 1-1, XP002785310, Gefunden im Internet: URL:https://support.hp.com/gb-en/drivers/s elfservice/hp-deskjet-2600-all-in-one-prin ter-series/12319824/model/16779358 [gefunden am 2018-10-02]

## Beschreibung

### Gebiet

Beispielhafte Ausführungsformen der Erfindung betreffen den Aufbau eines drahtlosen Kommunikationspfades zwischen einer ersten Vorrichtung für ein Nutzfahrzeug und einer zweiten Vorrichtung.

### Hintergrund

Im Stand der Technik sind Diagnoseschnittstellen für Nutzfahrzeuge bekannt, die über einen drahtgebundenen Kommunikationspfad eine Datenübertragung zwischen einer Diagnose- und/oder Wartungsvorrichtung und einer oder mehreren Komponenten des Nutzfahrzeugs ermöglichen. Allerdings ist dieser drahtgebundene Kommunikationspfad nicht für die Übertragung größerer Datenmengen geeignet. Wird er dennoch für die Übertragung größerer Datenmengen z.B. im Rahmen von Wartungs-und/oder Diagnoseaufgaben genutzt, hat dies folgende Konsequenzen:
- Es kann zu langen Warte-/Standzeiten des Nutzfahrzeugs und hierdurch erhöhten Kosten für die Durchführung von Wartungs- und/oder Diagnoseaufgaben kommen.
- Wenn die Wartungs- und/oder Diagnoseaufgaben im Rahmen der Produktion des Nutzfahrzeugs durchgeführt werden, kann es zur Überschreitung der für die Produktion vorgesehenen Taktzeiten kommen.

US 2014/0213238 A1 beschreibt eine Übertragung von Fahrzeugzustandsdaten von einer Telematikkontrolleinheit an ein mobiles Gerät über eine drahtgebundene oder drahtlose Verbindung.

### Zusammenfassung einiger beispielhafter Ausführungsformen der Erfindung

Die vorliegende Erfindung hat sich daher unter anderem die Aufgabe gestellt, diese Probleme zu überwinden.

Gemäß einem ersten Aspekt der Erfindung wird ein Verfahren zum Aufbauen eines drahtlosen Kommunikationspfades zwischen einer ersten Vorrichtung für ein Nutzfahrzeug und einer zweiten Vorrichtung offenbart, das Verfahren umfassend:
- Empfangen einer Kommunikationspfadanfragenachricht von der zweiten Vorrichtung an der ersten Vorrichtung, wobei die Kommunikationspfadanfragenachricht an der ersten Vorrichtung über einen drahtgebundenen Kommunikationspfad zwischen der ersten Vorrichtung und der zweiten Vorrichtung empfangen wird;
- Senden einer Kommunikationspfadaufbaunachricht von der ersten Vorrichtung an die zweite Vorrichtung, wobei die Kommunikationspfadaufbaunachricht über den drahtgebundenen Kommunikationspfad gesendet wird, und wobei die Kommunikationspfadaufbaunachricht eine oder mehrere Informationen zum Aufbauen eines drahtlosen Kommunikationspfads zwischen der ersten Vorrichtung und der zweiten Vorrichtung repräsentiert.

Das Verfahren gemäß dem ersten Aspekt der Erfindung wird beispielsweise durch die erste Vorrichtung und/oder Mittel der ersten Vorrichtung ausgeführt.

Gemäß dem ersten Aspekt der Erfindung wird ferner eine Vorrichtung für ein Nutzfahrzeug offenbart, wobei die Vorrichtung eingerichtet ist zur Ausführung und/oder Steuerung des Verfahrens gemäß dem ersten Aspekt der Erfindung oder umfassend jeweilige Mittel zur Ausführung und/oder Steuerung der Schritte des Verfahrens gemäß dem ersten Aspekt der Erfindung. Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des Computerprogramms gemäß dem ersten Aspekt der Erfindung) und mindestens einen Prozessor ausgebildet zum Ausführen von Programmanweisungen aus dem mindestens einen Speicher umfassen. Dementsprechend soll gemäß dem ersten Aspekt der Erfindung auch eine Vorrichtung für ein Nutzfahrzeug als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das Verfahren gemäß dem ersten Aspekt der Erfindung auszuführen und/oder zu steuern.

Alternativ oder zusätzlich können die Mittel ferner eine oder mehrere Kommunikationsschnittstellen (z.B. einen oder mehrere drahtlose und/oder drahtgebundene Netzwerkschnittstellen wie einen oder mehrere Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die Vorrichtung gemäß dem ersten Aspekt der Erfindung auch andere nicht aufgeführte Mittel umfassen kann.

Die Vorrichtung gemäß dem ersten Aspekt der Erfindung entspricht beispielsweise der ersten Vorrichtung in dem Verfahren gemäß dem ersten Aspekt der Erfindung.

Gemäß dem ersten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die Vorrichtung gemäß dem ersten Aspekt der Erfindung) zu veranlassen, das Verfahren gemäß dem ersten Aspekt auszuführen.

Das Computerprogramm gemäß dem ersten Aspekt der Erfindung ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Gemäß einem zweiten Aspekt der Erfindung wird ein Verfahren zum Aufbauen eines drahtlosen Kommunikationspfades zwischen einer ersten Vorrichtung für ein Nutzfahrzeug und einer zweiten Vorrichtung offenbart, das Verfahren umfassend:
- Senden einer Kommunikationspfadanfragenachricht von der zweiten Vorrichtung an die erste Vorrichtung, wobei die Kommunikationspfadanfragenachricht über einen drahtgebundenen Kommunikationspfad zwischen der ersten Vorrichtung und der zweiten Vorrichtung gesendet wird;
- Empfangen einer Kommunikationspfadaufbaunachricht von der ersten Vorrichtung an der zweiten Vorrichtung, wobei die Kommunikationspfadaufbaunachricht über den drahtgebundenen Kommunikationspfad empfangen wird, und wobei die Kommunikationspfadaufbaunachricht eine oder mehrere Informationen zum Aufbauen des drahtlosen Kommunikationspfads zwischen der ersten Vorrichtung und der zweiten Vorrichtung repräsentiert.

Das Verfahren gemäß dem zweiten Aspekt der Erfindung wird beispielsweise durch die zweite Vorrichtung und/oder Mittel der zweiten Vorrichtung ausgeführt.

Gemäß dem zweiten Aspekt der Erfindung wird ferner eine Vorrichtung offenbart, wobei die Vorrichtung eingerichtet ist zur Ausführung und/oder Steuerung des Verfahrens gemäß dem zweiten Aspekt der Erfindung oder umfassend jeweilige Mittel zur Ausführung und/oder Steuerung der Schritte des Verfahrens gemäß dem zweiten Aspekt der Erfindung. Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des Computerprogramms gemäß dem zweiten Aspekt der Erfindung) und mindestens einen Prozessor ausgebildet zum Ausführen von Programmanweisungen aus dem mindestens einen Speicher umfassen. Dementsprechend soll gemäß dem zweiten Aspekt der Erfindung auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das Verfahren gemäß dem zweiten Aspekt der Erfindung auszuführen und/oder zu steuern.

Alternativ oder zusätzlich können die Mittel ferner eine oder mehrere Kommunikationsschnittstellen (z.B. einen oder mehrere drahtlose und/oder drahtgebundene Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die Vorrichtung gemäß dem zweiten Aspekt der Erfindung auch andere nicht aufgeführte Mittel umfassen kann.

Die Vorrichtung gemäß dem zweiten Aspekt der Erfindung entspricht beispielsweise der zweiten Vorrichtung in dem Verfahren gemäß dem zweiten Aspekt der Erfindung.

Gemäß dem zweiten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die Vorrichtung gemäß dem zweiten Aspekt der Erfindung) zu veranlassen, das Verfahren gemäß dem zweiten Aspekt auszuführen.

Das Computerprogramm gemäß dem zweiten Aspekt der Erfindung ist beispielsweise auf einem computerlesbaren Speichermedium enthalten und/oder gespeichert.

Im Folgenden werden die Eigenschaften der Verfahren gemäß den Aspekten der Erfindung, der Vorrichtungen gemäß den Aspekten der Erfindung, der Computerprogramme gemäß den Aspekten der Erfindung - teilweise beispielhaft - beschrieben

Ein Nutzfahrzeug ist zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Die Aspekte der Erfindung ermöglichen den Aufbau eines drahtlosen Kommunikationspfads zwischen einer ersten Vorrichtung für ein Nutzfahrzeug und einer zweiten Vorrichtung zusätzlich zu einem drahtgebundenen Kommunikationspfad. Dies ist beispielsweise vorteilhaft, um größere Datenmengen zwischen der Vorrichtung für ein Nutzfahrzeug und der zweiten Vorrichtung zu übertragen, wenn der drahtgebundene Kommunikationspfad nicht für die Übertragung größere Datenmengen geeignet ist.

Der erste Aspekt der Erfindung betrifft den Aufbau des drahtlosen Kommunikationspfades zwischen der ersten Vorrichtung und der zweiten Vorrichtung auf Seiten der ersten Vorrichtung; und der zweite Aspekt der Erfindung betrifft des drahtlosen Kommunikationspfades zwischen der ersten Vorrichtung und der zweiten Vorrichtung auf Seiten der zweiten Vorrichtung. Dementsprechend soll die Offenbarung von für den ersten Aspekt der Erfindung offenbarten Merkmalen - soweit sinnvoll - auch als Offenbarung korrespondierender Merkmale für den zweiten Aspekt der Erfindung gelten.

Ein Kommunikationspfad beschreibt beispielsweise den Übertragungsweg über den Daten zwischen zwei Vorrichtungen übertragen werden können. Unter einem Kommunikationspfad soll sowohl ein direkter Übertragungsweg zwischen zwei Vorrichtungen als auch ein indirekter Übertragungsweg zwischen zwei Vorrichtungen mit einer oder mehreren Zwischenstationen verstanden werden. Die Datenübertragung über einen solchen Kommunikationspfad kann gemäß einem oder mehreren standardisierten Kommunikationsprotokollen, zum Beispiel verbindungsorientierten und/oder verbindungslosen Kommunikationsprotokollen erfolgen. Neben einem Kommunikationspfad mit ausschließlich drahtlosen Abschnitten soll unter einem drahtlosen Kommunikationspfad beispielsweise auch ein Kommunikationspfad verstanden werden, der zumindest einen drahtlosen Abschnitt und zumindest einen drahtgebundenen Abschnitt umfasst. Es versteht sich, dass die Datenübertragung über einen Kommunikationspfad (z.B. den drahtlosen und/oder den drahtgebundenen Kommunikationspfad) zumindest teilweise verschlüsselt und/oder zumindest teilweise unverschlüsselt erfolgen kann.

Die Datenübertragung über einen Kommunikationspfad erfolgt durch ein oder mehrere Signale, die die zu übertragenden Informationen Daten repräsentieren und sich entlang des Kommunikationspfads ausbreiten. Dementsprechend soll unter dem Senden einer Nachricht und/oder von Daten über einen Kommunikationspfad verstanden werden, dass ein oder mehrere solcher Signale, die die Nachricht und/oder die Daten repräsentieren, gesendet werden; und unter dem Empfangen einer Nachricht und/oder von Daten über einen Kommunikationspfad soll verstanden werden, dass ein oder mehrere solcher Signale, die die Nachricht und/oder die Daten repräsentieren, empfangen werden. Ein Beispiel für drahtlose Signale zur Datenübertragung über einen drahtlosen Kommunikationspfad sind Funksignale; und ein Beispiel für drahtgebundene Signale zur Datenübertragung über einen drahtgebundenen Kommunikationspfad sind elektrische Signale. Zum Senden und Empfangen entsprechender Signale können die erste und die zweite Vorrichtung entsprechende Kommunikationsmittel wie eine Senderschaltung, eine Empfängerschaltung oder eine Sender-Empfängerschaltung (z.B. als Teil einer Kommunikations- und/oder Netzwerkschnittstelle) aufweisen.

Vorzugsweise soll unter einem drahtlosen Kommunikationspfad eine Verbindung über ein drahtloses Kommunikationsnetzwerk wie ein WLAN-Kommunikationsnetzwerk (Wireless Local Area Network) oder ein Zigbee-Kommunikationsnetzwerk oder ein Bluetooth-Kommunikationsnetzwerk verstanden werden. Die Bluetooth-Spezifikationen sind derzeit im Internet unter www.bluetooth.org erhältlich. WLAN ist zum Beispiel in den Standards der IEEE-802.11-Familie spezifiziert. Die Zigbee-Spezifikationen sind derzeit im Internet unter www.zigbee.org erhältlich.

Unter einem drahtgebundenen Kommunikationspfad soll vorzugsweise eine Verbindung über ein drahtgebundenes Kommunikationsnetzwerk wie ein Ethernet-Kommunikationsnetzwerk, ein CAN-Bussystem (Controller Area Network), ein K-Leitungs-Bussystem oder ein FlexRay-Bussystem verstanden werden. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1 und FlexRay in den Standards der ISO 17458-Familie spezifiziert

Der drahtgebundene Kommunikationspfad zwischen der ersten Vorrichtung und der zweiten Vorrichtung kann beispielsweise zumindest teilweise aufgebaut werden, indem eine drahtgebundene Verbindungsschnittstelle der zweiten Vorrichtung mit einer korrespondierenden drahtgebundenen Verbindungsschnittstelle der ersten Vorrichtung und/oder des Nutzfahrzeugs (z.B. eine Buchse wie eine Diagnosebuchse) verbunden wird. Dementsprechend soll eine erste Vorrichtung und/oder ein Nutzfahrzeug mit einer solchen drahtgebundenen Verbindungsschnittstelle und eine zweite Vorrichtung mit einer korrespondierenden drahtgebundenen Verbindungsschnittstelle als offenbart verstanden werden. Ein Beispiel für solche korrespondierenden drahtgebundenen Verbindungsschnittstellen (z.B. korrespondierende drahtgebundene Diagnoseschnittstellen) sind eine Buchse (z.B. eine Diagnosebuchse wie eine OBD-2 (On-Board Diagnose) Diagnosebuchse) und ein korrespondierender Stecker (z.B. ein Diagnosestecker wie ein OBD-2 Diagnosestecker). Diagnoseschnittstellen in Form der OBD-2 Diagnosebuchse und des korrespondierenden OBD-2 Diagnosestecker sind unter anderem in dem Standard DIN ISO 15765 spezifiziert und werden häufig in Nutzfahrzeugen verwendet.

Dass die erste Vorrichtung für ein Nutzfahrzeug ist soll beispielsweise so verstanden werden, dass die erste Vorrichtung zum dauerhaften Einbau in dem Nutzfahrzeug eingerichtet ist und/oder dauerhaft in dem Nutzfahrzeug eingebaut ist. Zum Beispiel ist die erste Vorrichtung ein Teil des Nutzfahrzeugs. Beispielsweise handelt es sich bei der ersten Vorrichtung um eine Komponente des Nutzfahrzeugs wie eine Telematikeinheit, einen Bordcomputer oder eine Steuervorrichtung (z.B. eine Electronic Control Unit, ECU).

Die zweite Vorrichtung ist beispielsweise separat von dem Nutzfahrzeug. Zum Beispiel ist die zweite Vorrichtung kein Teil des Nutzfahrzeugs und/oder sie ist nicht zum dauerhaften Einbau in dem Nutzfahrzeug eingerichtet. Die zweite Vorrichtung kann beispielsweise eine Diagnose- und/oder Wartungsvorrichtung sein, zum Beispiel eine Diagnose- und/oder Wartungsvorrichtung zum Durchführen von Wartungs- und/oder Diagnoseaufgaben (z.B. Auslesen eines Speichers des Nutzfahrzeugs oder der ersten Vorrichtung und/oder Durchführen eines Softwareupdates einer Software der ersten Vorrichtung) an der ersten Vorrichtung und/oder dem Nutzfahrzeug. Zum Durchführen der Wartungs- und/oder Diagnoseaufgaben kann beispielsweise zumindest zunächst der drahtgebundene Kommunikationspfad zwischen der ersten Vorrichtung und der zweiten Vorrichtung aufgebaut werden, beispielsweise indem korrespondierende drahtgebundene Verbindungsschnittstellen (z.B. Diagnoseschnittstellen) der ersten Vorrichtung und der zweiten Vorrichtung miteinander verbunden werden.

Gemäß dem zweiten Aspekt der Erfindung wird eine Kommunikationspfadanfragenachricht von der zweiten Vorrichtung über den drahtgebundenen Kommunikationspfad an die erste Vorrichtung gesendet, zum Beispiel wird die Kommunikationspfadanfragenachricht durch Kommunikationsmittel der zweiten Vorrichtung gesendet. Gemäß dem ersten Aspekt der Erfindung wird die Kommunikationspfadanfragenachricht von der zweiten Vorrichtung über den drahtgebundenen Kommunikationspfad an der ersten Vorrichtung empfangen, zum Beispiel wird die Kommunikationspfadanfragenachricht durch Kommunikationsmittel der ersten Vorrichtung empfangen.

Zum Beispiel kann die zweite Vorrichtung eingerichtet sein, die Kommunikationspfadanfrage an die ersten Vorrichtung zu senden, wenn vorher festgelegte Wartungs- und/oder Diagnoseaufgaben durchgeführt werden sollen und/oder wenn Wartungs- und/oder Diagnoseaufgaben durchgeführt werden sollen, bei denen eine größere Datenmenge (z.B. eine Datenmenge, die einen zuvor festgelegten Schwellwert überschreitet) zwischen der ersten Vorrichtung und der zweiten Vorrichtung übertragen werden muss. Dies ist beispielsweise vorteilhaft, damit die zweite Vorrichtung den Aufbau des drahtlosen Kommunikationspfads bei der ersten Vorrichtung anfragen kann, zum Beispiel wenn der drahtgebundene Kommunikationspfad für die Übertragung der für die Durchführung der Wartungs- und/oder Diagnoseaufgaben erforderlichen Daten nicht geeignet ist. Es versteht sich, dass die Erfindung hierauf nicht beschränkt ist und die zweite Vorrichtung beispielsweise auch eingerichtet sein kann, die Kommunikationspfadanfrage an die erste Vorrichtung zu senden, wenn der drahtgebundene Kommunikationspfad zwischen der ersten Vorrichtung und der zweiten Vorrichtung aufgebaut ist.

Gemäß dem ersten Aspekt der Erfindung wird die Kommunikationspfadaufbaunachricht von der ersten Vorrichtung über den drahtgebundenen Kommunikationspfad an die zweite Vorrichtung gesendet. ; gemäß dem zweiten Aspekt der Erfindung wird die Kommunikationspfadaufbaunachricht von der ersten Vorrichtung über den drahtgebundenen Kommunikationspfad an der zweiten Vorrichtung empfangen. Zum Beispiel wird die Kommunikationspfadaufbaunachricht durch Kommunikationsmittel der ersten Vorrichtung gesendet und/oder durch Kommunikationsmittel der zweiten Vorrichtung empfangen.

Die Kommunikationspfadaufbaunachricht repräsentiert eine oder mehrere Informationen zum Aufbauen des drahtlosen Kommunikationspfads zwischen der ersten Vorrichtung und der zweiten Vorrichtung.

Unter einer solchen Information zum Aufbauen des drahtlosen Kommunikationspfads zwischen der ersten Vorrichtung und der zweiten Vorrichtung soll beispielsweise eine Information verstanden werden, die die zweite Vorrichtung veranlasst, den drahtlosen Kommunikationspfad aufzubauen und/oder den Aufbau des drahtlosen Kommunikationspfads zu starten. Alternativ oder zusätzlich kann unter einer solchen Information zum Aufbauen des drahtlosen Kommunikationspfads zwischen der ersten Vorrichtung und der zweiten Vorrichtung beispielsweise eine Information verstanden werden, die die zweite Vorrichtung benötigt und/oder nutzen kann, um den drahtlosen Kommunikationspfad zwischen der ersten Vorrichtung und der zweiten Vorrichtung aufzubauen und/oder den Aufbau des drahtlosen Kommunikationspfads zwischen der ersten Vorrichtung und der zweiten Vorrichtung zu starten. Dies ist beispielsweise vorteilhaft, um eine hohe Effizienz und/oder Sicherheit beim Aufbau des drahtlosen Kommunikationspfads durch die zweite Vorrichtung zu ermöglichen und/oder um die zweite Vorrichtung in die Lage zu versetzen, den drahtlosen Kommunikationspfad aufbauen zu können.

In beispielhaften Ausführungsformen der Aspekte der Erfindung umfasst das Verfahren gemäß dem ersten Aspekt und/oder dem zweiten Aspekt der Erfindung ferner:
- Aufbauen des drahtlosen Kommunikationspfads zwischen der ersten Vorrichtung und der zweiten Vorrichtung.

Dabei soll unter dem Aufbauen des drahtlosen Kommunikationspfads zwischen der ersten Vorrichtung und der zweiten Vorrichtung beispielsweise das Herstellen und/oder das Aushandeln einer drahtlosen Netzwerkverbindung über ein drahtloses Kommunikationsnetzwerk verstanden werden. Zum Beispiel umfasst das Aufbauen des drahtlosen Kommunikationspfads zwischen der ersten Vorrichtung und der zweiten Vorrichtung das Authentisieren zumindest einer der Vorrichtungen gegenüber und/oder das Authentifizieren zumindest einer der Vorrichtungen durch einen drahtlosen Zugangspunkt eines drahtlosen Kommunikationsnetzwerk, wobei der drahtlose Kommunikationspfad eine Netzwerkverbindung über dieses drahtloses Kommunikationsnetzwerk ist und/oder einschließt.

Zum Beispiel umfasst das Aufbauen des drahtlosen Kommunikationspfads zwischen der ersten Vorrichtung und der zweiten Vorrichtung gemäß dem ersten Aspekt der Erfindung das Authentisieren zumindest einer der Vorrichtungen gegenüber und/oder das Authentifizieren zumindest einer der Vorrichtungen durch einen drahtlosen Zugangspunkt eines drahtlosen Kommunikationsnetzwerk, wobei der drahtlose Kommunikationspfad eine Netzwerkverbindung über dieses drahtloses Kommunikationsnetzwerk ist und/oder einschließt.

Das Aufbauen des drahtlosen Kommunikationspfads zwischen der ersten Vorrichtung und der zweiten Vorrichtung kann zumindest teilweise auf den durch die Kommunikationspfadaufbaunachricht repräsentierten Informationen zum Aufbauen des drahtlosen Kommunikationspfads zwischen der ersten Vorrichtung und der zweiten Vorrichtung basieren. Dies soll so verstanden werden, dass die Informationen zum Aufbauen des drahtlosen Kommunikationspfads genutzt werden. Zum Beispiel handelt es sich bei diesen Informationen um eine Kennung und/oder einen Schlüssel, die, wie unten im Detail offenbart, zum Aufbauen des drahtlosen Kommunikationspfads genutzt werden.

In beispielhaften Ausführungsformen der Aspekte der Erfindung repräsentiert die Kommunikationspfadanfragenachricht zumindest eine Berechtigungsnachweisinformation zum Aufbauen des drahtlosen Kommunikationspfads. Zum Beispiel umfasst das Bestimmen gemäß dem ersten Aspekt, ob ein drahtloser Kommunikationspfad zwischen der ersten Vorrichtung und der zweiten Vorrichtung aufgebaut werden darf, das Prüfen der Berechtigungsnachweisinformation.

Zum Beispiel weist die Berechtigungsnachweisinformation eine Berechtigung der zweiten Vorrichtung zum Aufbauen des drahtlosen Kommunikationspfads nach. Ein Beispiel für eine solche Berechtigungsnachweisinformation ist ein (z.B. geheimer) Berechtigungsschlüssel, eine digitale Signatur und/oder eine Antwort im Rahmen eines Challenge-Response-Verfahrens. Zum Beispiel kann die zweite Vorrichtung durch den Berechtigungsschlüssel, die digitale Signatur und/oder die Antwort im Rahmen eines Challenge-Response-Verfahrens nachweisen, dass sie eine für den Aufbau des drahtlosen Kommunikationspfads geeignete Vorrichtung ist und/oder, wenn die zweite Vorrichtung eine Diagnose-und/oder Wartungsvorrichtung, dass sie eine für die Durchführung von Diagnose- und/oder Wartungsaufgaben zugelassene Vorrichtung ist.

Wenn die Berechtigungsnachweisinformation ein Berechtigungsschlüssel (z.B. ein Passwort oder eine Passphrase) ist, kann zum Beispiel vorgegeben sein, dass das Bestimmen ergibt, dass der drahtlose Kommunikationspfad zwischen der ersten Vorrichtung und der zweiten Vorrichtung aufgebaut werden darf, wenn die Kommunikationspfadanfragenachricht einen zuvor festgelegten Berechtigungsschlüssel repräsentiert. Zum Beispiel kann eine Berechtigungsinformation, die eine entsprechende Regel und/oder Berechtigung repräsentiert (z.B. eine Berechtigungsinformation umfassend eine Repräsentation des Berechtigungsschlüssels), in einem Speicher der ersten Vorrichtung gespeichert sein. Dabei kann unter einem Passwort oder einer Passphrase beispielsweise eine Zeichenfolge, eine Buchstabenfolge und/oder eine Ziffernfolge verstanden werden.

Ein weiteres Beispiel für eine Berechtigungsnachweisinformation ist eine digitale Signatur einer Kennung der zweiten Vorrichtung (wie einem Netzwerknamen oder einer MAC-Adresse (Media-Access-Control) der zweiten Vorrichtung). In diesem Beispiel kann vorgegeben sein, dass das Bestimmen ergibt, dass der drahtlose Kommunikationspfad zwischen der ersten Vorrichtung und der zweiten Vorrichtung aufgebaut werden darf, wenn die Kommunikationspfadanfragenachricht eine digitale Signatur einer Kennung der zweiten Vorrichtung repräsentiert und die digitale Signatur von einer zuvor festgelegten Zertifizierungsstelle und/oder mit einem zuvor festgelegten privaten Schlüssel erzeugt wurde. Zum Beispiel kann eine Berechtigungsinformation, die eine entsprechende Regel und/oder Berechtigung repräsentiert (z.B. eine Berechtigungsinformation umfassend eine Repräsentation des öffentlichen Schlüssels der Zertifizierungsstelle und/oder des zu dem privaten Schlüssel korrespondierenden öffentlichen Schlüssels), in einem Speicher der ersten Vorrichtung gespeichert sein.

Außerdem kann es sich, wie oben offenbart, bei der Berechtigungsnachweisinformation um eine Antwort im Rahmen eines Challenge-Response-Verfahrens handeln. Hierfür kann vorgegeben sein, dass, wenn die erste Vorrichtung eine erwartete Antwort auf eine zuvor an die zweite Vorrichtung gesendete Aufforderung (z.B. in Form einer Nachricht, die die Aufforderung repräsentiert) erhält, das Bestimmen ergibt, dass der drahtlose Kommunikationspfad zwischen der ersten Vorrichtung und der zweiten Vorrichtung aufgebaut werden darf. Zum Beispiel kann eine Berechtigungsinformation, die eine entsprechende Regel und/oder Berechtigung repräsentiert (z.B. eine Berechtigungsinformation umfassend eine Repräsentation eines Algorithmus zum Bestimmen der erwartete Antwort auf eine Aufforderung), in einem Speicher der ersten Vorrichtung gespeichert sein.

Es versteht sich, dass die Aspekte der Erfindung nicht auf die beispielhaft offenbarten Berechtigungsnachweisinformationen beschränkt sind.

In beispielhaften Ausführungsformen der Aspekte der Erfindung wird der drahtlose Kommunikationspfad zwischen der ersten Vorrichtung und der zweiten Vorrichtung über ein drahtloses Kommunikationsnetzwerk aufgebaut. Wie oben offenbart, kann es sich bei dem Kommunikationsnetzwerk beispielsweise um ein WLAN-, Zigbee- und/oder Bluetooth-Kommunikationsnetzwerk handeln.

In beispielhaften Ausführungsformen der Aspekte der Erfindung umfasst das Verfahren gemäß dem ersten und/oder zweiten Aspekt der Erfindung ferner:
- Bereitstellen eines drahtlosen Zugangspunkts für ein drahtloses Kommunikationsnetzwerk.

Unter dem Bereitstellen des drahtlosen Zugangspunkts für ein drahtloses Kommunikationsnetzwerk soll beispielsweise verstanden werden, dass der drahtlose Zugangspunkt für ein drahtloses Kommunikationsnetzwerk aktiviert wird, so dass eine oder mehrere Kommunikationsverbindungen über das drahtlose Kommunikationsnetzwerk aufgebaut werden können.

Der drahtlose Zugangspunkt ist beispielsweise ein drahtloser Zugangspunkt des drahtlosen Kommunikationsnetzwerks, über das der drahtlose Kommunikationspfad zwischen der ersten Vorrichtung und der zweiten Vorrichtung aufgebaut wird. Zum Beispiel handelt es sich um einen WLAN-, Zigbee- und/oder Bluetooth-Zugangspunkt. Der drahtlose Zugangspunkt wird zum Beispiel durch eine drahtlose Kommunikationsschnittstelle des Nutzfahrzeugs und/oder eine drahtlose Kommunikationsschnittstelle der ersten Vorrichtung und/oder der zweiten Vorrichtung bereitgestellt.

Es kann vorgesehen sein, dass der drahtlose Zugangspunkt für ein drahtloses Kommunikationsnetzwerk bereitgestellt wird, wenn eine Kommunikationspfadaufbaunachricht empfangen wird und/oder bestimmt wird, dass der drahtlose Kommunikationspfad zwischen der ersten Vorrichtung und der zweiten Vorrichtung aufgebaut werden darf. Zum Beispiel wird der der drahtlose Zugangspunkt für ein drahtloses Kommunikationsnetzwerk nur dann bereitgestellt, wenn eine Kommunikationspfadaufbaunachricht empfangen wird und/oder wenn bestimmt wird, dass der drahtlose Kommunikationspfad zwischen der ersten Vorrichtung und der zweiten Vorrichtung aufgebaut werden darf. Dies ist beispielsweise vorteilhaft, um zu vermeiden, dass dauerhaft ein drahtloser Zugangspunkt bereitgestellt wird.

Es versteht sich, dass die Erfindung nicht hierauf beschränkt ist und der drahtlose Zugangspunkt beispielsweise auch unabhängig davon bereitgestellt werden kann, ob eine Kommunikationspfadaufbaunachricht empfangen wird und/oder bestimmt wird, dass der drahtlose Kommunikationspfad zwischen der ersten Vorrichtung und der zweiten Vorrichtung aufgebaut werden darf.

In beispielhaften Ausführungsformen der Aspekte der Erfindung repräsentiert die Kommunikationspfadaufbaunachricht zumindest eine der folgenden Informationen:
- eine Kennung eines drahtlosen Zugangspunkts und/oder eines drahtlosen Kommunikationsnetzwerks,
- einen Schlüssel für einen drahtlosen Zugangspunkt und/oder ein drahtloses Kommunikationsnetzwerk.

Unter einer Kennung eines drahtlosen Zugangspunkts und/oder eines drahtlosen Kommunikationsnetzwerks soll beispielsweise eine Bezeichnung des drahtlosen Zugangspunkts und/oder des drahtlosen Kommunikationsnetzwerks, anhand derer der drahtlose Zugangspunkt und/oder das drahtlose Kommunikationsnetzwerk identifizierbar ist, verstanden werden. Ein Beispiel für eine solche Kennung eines drahtlosen Zugangspunkts und/oder eines drahtlosen Kommunikationsnetzwerks ist beispielsweise eine SSID (Service Set Identification) oder eine BSSID (Basic Service Set Identification). Gerade in Umgebungen, in denen Wartungs- oder Diagnoseaufgaben an dem Nutzfahrzeug durchgeführt werden sollen, wie zum Beispiel einer Werkstatthalle kann es eine Vielzahl von solchen drahtlosen Zugangspunkten und/oder drahtlosen Kommunikationsnetzwerken geben, so dass, wenn die Kommunikationspfadaufbaunachricht die entsprechende Kennung repräsentiert, sichergestellt werden kann, dass der drahtlose Kommunikationspfad auch mit dem richtigen drahtlosen Zugangspunkt und/oder drahtlosen Kommunikationsnetzwerk aufgebaut wird.

Unter einem Schlüssel für einen drahtlosen Zugangspunkt und/oder ein drahtloses Kommunikationsnetzwerk soll beispielsweise ein Netzwerkschlüssel wie ein Passwort oder eine Passphrase zum Authentisieren gegenüber dem und/oder zum Authentifizieren durch den drahtlosen Zugangspunkt und/oder dem drahtlosen Kommunikationsnetzwerk verstanden werden. Beispielsweise ist der Schlüssel ein Netzwerkschlüssel wie ein Passwort oder eine Passphrase gemäß dem WPA- oder dem WPA2-Standard. WPA steht für Wi-Fi Protected Access. Die WPA- und WPA2-Standards spezifizieren durch die Wi-Fi Alliance (www.wi-fi.org) entwickelte Sicherheitsprotokolle für WLAN-Kommunikationsnetzwerke und basieren auf dem IEEE 802.11i-Standard.

Beispielsweise kennt der Benutzer der zweiten Vorrichtung den Netzwerkschlüssel nicht. Der Netzwerkschlüssel kann beispielsweise ein Einmalschlüssel sein, der nur für das Aufbauen des drahtlosen Kommunikationspfads erzeugt und verwendet wird. Es versteht sich, dass der Netzwerkschlüssel alternativ auch für mehrmalige Verwendungen vorgesehen sein kann. Zum Beispiel kann der Netzwerkschlüssel durch den Besitzer/Eigentümer der ersten Vorrichtung eingestellt werden (z.B. so eingestellt werden, dass ein Benutzer der zweiten Vorrichtung und/oder die zweite Vorrichtung den Netzwerkschlüssel nicht kennt, so dass die zweite Vorrichtung den Netzwerkschlüssel zum Aufbauen des drahtlosen Kommunikationspfads benötigt).

Bei dem drahtlosen Zugangspunkt kann es sich beispielsweise um einen von der ersten Vorrichtung und/oder dem Nutzfahrzeug bereitgestellten drahtlosen Zugangspunkt des drahtlosen Kommunikationsnetzwerks handeln, über das der drahtlose Kommunikationspfad zwischen der ersten Vorrichtung und der zweiten Vorrichtung aufgebaut wird; und bei dem drahtlosen Kommunikationsnetzwerk kann es sich beispielsweise um ein drahtloses Kommunikationsnetzwerk handeln, über das der drahtlose Kommunikationspfad zwischen der ersten Vorrichtung und der zweiten Vorrichtung aufgebaut wird. Die Kennung des drahtlosen Zugangspunkts und/oder des drahtlosen Kommunikationsnetzwerks und der Schlüssel für den drahtlosen Zugangspunkt und/oder das drahtlose Kommunikationsnetzwerk werden beispielsweise zum Aufbauen des drahtlosen Kommunikationspfads über das drahtlose Kommunikationsnetzwerk benötigt. Wenn das drahtlose Kommunikationsnetzwerk ein WLAN-Kommunikationsnetzwerk mit einer WPA- oder WPA2-Verschlüsselung ist, benötigt die zweite Vorrichtung beispielsweise eine SSID oder BSSID, um den drahtlosen Zugangspunkt und/oder das drahtlose Kommunikationsnetzwerk identifizieren zu können, und ein Passwort oder eine Passphrase gemäß dem WPA- oder dem WPA2-Standard, um sich gegenüber dem drahtlosen Zugangspunkt und/oder dem drahtlosen Kommunikationsnetzwerk authentisieren zu können.

Dies ist beispielsweise vorteilhaft, um eine hohe Sicherheit und/oder Effizienz beim Aufbau des drahtlosen Kommunikationspfads durch die zweite Vorrichtung zu ermöglichen und/oder um die zweite Vorrichtung in die Lage zu versetzen, den drahtlosen Kommunikationspfad aufbauen zu können.

In beispielhaften Ausführungsformen der Aspekte der Erfindung umfasst das Verfahren gemäß dem ersten und/oder zweiten Aspekt ferner:
- Empfangen und/oder Senden von Nutzdaten über den drahtlosen Kommunikationspfad.

Unter Nutzdaten sollen beispielsweise Daten verstanden werden, die zwischen der ersten Vorrichtung und der zweiten Vorrichtung zum Durchführen von Wartungs- und/oder Diagnoseaufgaben (z.B. Auslesen eines Speichers des Nutzfahrzeugs oder der ersten Vorrichtung und/oder Durchführen eines Softwareupdates einer Software der ersten Vorrichtung) übertragen werden müssen. Zum Beispiel können die Nutzdaten (1) zumindest einen Teil der in einem Speicher des Nutzfahrzeugs oder der ersten Vorrichtung gespeicherten Informationen (z.B. Fehler- und/oder Zustandsinformationen) und/oder (2) ein oder mehrerer Updateinformationen zum Durchführen eines Softwareupdate einer Software der ersten Vorrichtung und/oder (3) ein oder mehrere Konfigurationsinformationen zum Konfigurieren der ersten Vorrichtung repräsentieren. Es versteht sich, dass es sich bei den genannten lediglich um Beispiele handelt und die Erfindung nicht darauf beschränkt ist.

Neben den Nutzdaten, die über den drahtlosen Kommunikationspfad zwischen der ersten Vorrichtung und der zweiten Vorrichtung übertragen werden, können auch Daten (z.B. Steuer- und/oder Verifizierungsdaten) über den drahtgebundenen Kommunikationspfad zwischen der ersten Vorrichtung und der zweiten Vorrichtung übertragen werden. Zum Beispiel umfasst das Verfahren gemäß dem ersten und/oder zweiten Aspekt ferner:
- Empfangen und/oder Senden von Verifizierungsdaten über den drahtgebundenen Kommunikationspfad zum Verifizieren der über den drahtlosen Kommunikationspfad empfangenen und/oder gesendeten Nutzdaten.

Unter dem Verifizieren der über den drahtlosen Kommunikationspfad empfangenen und/oder gesendeten Nutzdaten soll beispielsweise das Verifizieren der Integrität und/oder der Authentizität der Nutzdaten verstanden werden. Dementsprechend können die Verifizierungsdaten beispielsweise eine oder mehrere für die Authentizität und/oder Integrität der Nutzdaten oder eines Teils der Nutzdaten charakteristische Informationen repräsentieren.

Eine für die Authentizität der Nutzdaten charakteristische Information ist beispielsweise eine digitale Signatur der Nutzdaten und/oder eines Teils der Nutzdaten. Durch eine solche digitale Signatur kann beispielsweise die vertrauenswürdige Herkunft der Nutzdaten bestätigt werden. Zum Beispiel kann festgelegt sein, die Herkunft der Nutzdaten vertrauenswürdig ist, wenn die digitale Signatur von einer zuvor festgelegten Zertifizierungsstelle und/oder mit einem zuvor festgelegten privaten Schlüssel erzeugt wurde.

Eine für die Integrität der Nutzdaten charakteristische Information ist beispielsweise eine Hashwert und/oder eine Prüfsumme der Nutzdaten und/oder eines Teils der Nutzdaten. Durch eine solchen Hashwert und/oder eine solche Prüfsumme kann beispielsweise die Integrität der Nutzdaten bestätigt werden, indem ein Hashwert und/oder eine Prüfsumme basierend auf den empfangenen Nutzdaten oder einem Teil der empfangenen Nutzdaten gebildet und mit dem Hashwert und/oder der Prüfsumme, die durch die Verifizierungsdaten repräsentiert werden, verglichen wird. Zum Beispiel kann festgelegt sein, dass, wenn beide Hashwerte oder beide Prüfsummen übereinstimmen, von der Integrität der empfangenen Nutzdaten ausgegangen werden soll. Zum Beispiel kann der Algorithmus zum Bilden des Hashwerts und/oder der Prüfsumme zuvor festgelegt sein.

Die Übertragung von Daten über einen drahtlosen Kommunikationspfad ist typischerweise störanfälliger als die Übertragung von Daten über einen drahtgebundenen Kommunikationspfad. Dementsprechend ist das Übertragen der Verifizierungsdaten über den drahtgebundenen Kommunikationspfad beispielsweise vorteilhaft, um sicherzustellen, dass diese möglichst störungsfrei übertragen werden und somit die Verifizierung der über den drahtlosen Kommunikationspfad übertragenen Nutzdaten zu ermöglichen.

In beispielhaften Ausführungsformen der Aspekte der Erfindung ist die maximale Datenübertragungsrate über den drahtgebundenen Kommunikationspfad geringer als die maximale Datenübertragungsrate über den drahtlosen Kommunikationspfad.

Zum Beispiel ist die Datenrate des drahtgebundenen Kommunikationspfad kleiner oder gleich 500 kBit/s oder sogar kleiner oder gleich 125 kBit/s.

Zum Beispiel ist die Datenrate des drahtlosen Kommunikationspfad größer oder gleich 10MBit/s oder sogar größer oder gleich 100 MBit/s.

In beispielhaften Ausführungsformen der Aspekte der Erfindung stellt der drahtgebundene Kommunikationspfad einen indirekten Übertragungsweg zwischen der ersten Vorrichtung und der zweiten Vorrichtung dar. Zum Beispiel verläuft der drahtgebundene Kommunikationspfad zwischen der ersten Vorrichtung und der zweiten Vorrichtung zumindest über eine oder mehrere Zwischenstationen. Bei einer solchen Zwischenstation kann es sich beispielsweise um eine Steuervorrichtung des Nutzfahrzeugs wie ein elektronisches Bremssystem handeln. Solche Steuervorrichtungen sind häufig nicht für die Weiterleitung großer Datenmengen ausgelegt. Häufig werden über solche Kommunikationspfade nur Datenraten von kleiner oder gleich 125 kBit/s erreicht.

In beispielhaften Ausführungsformen der Aspekte der Erfindung erfolgt die Datenübertragung über den drahtgebundenen Kommunikationspfad gemäß zumindest einem der folgenden Kommunikationsstandards: (1) Ethernet-Kommunikationsstandard, (2) CAN- Kommunikationsstandard, (3) K-Leitungs-Kommunikationsstandard oder (4) FlexRay- Kommunikationsstandard. Wie oben offenbart, ist Ethernet zum Beispiel in den Standards der IEEE-802.3-Familie spezifiziert. CAN ist in den Standards der ISO 11898-Familie, K-Leitung ist in den Standards ISO 9141 und ISO 14230-1 und FlexRay in den Standards der ISO 17458-Familie spezifiziert.

In beispielhaften Ausführungsformen der Aspekte der Erfindung erfolgt die Datenübertragung über den drahtlosen Kommunikationspfad gemäß zumindest einem der folgenden Kommunikationsstandards: (1) WLAN-Kommunikationsstandard, (2) Zigbee-Kommunikationsstandard oder (3) Bluetooth-Kommunikationsstandard. Wie oben offenbart, sind die Bluetooth-Spezifikationen derzeit im Internet unter www.bluetooth.org erhältlich. WLAN ist zum Beispiel in den Standards der IEEE-802.11-Familie spezifiziert. Die Zigbee-Spezifikationen sind derzeit im Internet unter www.zigbee.org erhältlich.

In beispielhaften Ausführungsformen der Aspekte der Erfindung ist die erste Vorrichtung eine Telematikeinheit für ein Nutzfahrzeug.

Eine Telematikeinheit eines Nutzfahrzeugs ist beispielsweise eingerichtet zum Erfassen von Zustandsinformationen des Nutzfahrzeugs. Beispiele solcher Zustandsinformationen sind: Tankfüllstandinformationen, Reifendruckinformationen, Feuchtigkeitsinformationen, Temperaturinformationen, Türöffnungs- und -schließinformationen und/oder Positionsinformationen. Zum Beispiel kann die Telematikeinheit diese Zustandsinformationen durch entsprechende Sensoren erfassen und/oder von entsprechenden Sensoren empfangen. Ferner ist die Telematikeinheit eines Nutzfahrzeugs beispielsweise eingerichtet zum Senden der erfassten Zustandsinformationen an einen Server eines Telematiksystems und/oder eines Telematikdienstes. Der Server stellt beispielsweise eine Benutzeroberfläche zum Zugriff auf die Zustandsinformationen über das Internet bereit

Auch kann die Telematikeinheit beispielsweise eingerichtet sein, die Zustandsinformationen zumindest teilweise an die zweite Vorrichtung über den drahtgebundenen Kommunikationspfad und/oder den drahtlosen Kommunikationspfad zu senden. Alternativ oder zusätzlich ist die Telematikeinheit beispielsweise eingerichtet, Updateinformationen zum Durchführen eines Softwareupdate einer Software der Telematikeinheit und/oder ein oder mehrere Konfigurationsinformation zum Konfigurieren der Telematikeinheit über den drahtgebundenen Kommunikationspfad und/oder den drahtlosen Kommunikationspfad von der zweiten Vorrichtung zu empfangen.

In beispielhaften Ausführungsformen der Aspekte der Erfindung ist die zweite Vorrichtung eine Diagnose-und/oder Wartungsvorrichtung. Dabei soll unter einer Diagnose- und/oder Wartungsvorrichtung beispielsweise ein Benutzergerät wie ein Desktop-Computer und/oder ein mobiles Gerät (z.B. ein Laptop-Computer, ein Smartphone, ein Tablet-Computer oder ein Handheld-Computer) verstanden werden, das eingerichtet ist zum Durchführen von Wartungs- und/oder Diagnoseaufgaben (z.B. Auslesen eines Speichers des Nutzfahrzeugs oder der ersten Vorrichtung und/oder Durchführen eines Softwareupdates einer Software der ersten Vorrichtung) an der ersten Vorrichtung und/oder dem Nutzfahrzeug.

Gemäß einem dritten Aspekt der Erfindung wird ein Verfahren offenbart, wobei das Verfahren die Schritte des Verfahrens gemäß dem ersten Aspekt der Erfindung und die Schritte des Verfahrens gemäß dem zweiten Aspekt der Erfindung umfasst.

Gemäß dem dritten Aspekt der Erfindung wird ferner ein System offenbart, wobei das System eine Vorrichtung für ein Nutzfahrzeug gemäß dem ersten Aspekt der Erfindung und eine Vorrichtung gemäß dem zweiten Aspekt der Erfindung umfasst. Zum Beispiel wird das Verfahren gemäß dem dritten Aspekt der Erfindung durch dieses System ganz oder teilweise ausgeführt. Es versteht sich, dass das System gemäß dem dritten Aspekt der Erfindung ferner einen von der ersten Vorrichtung entfernten Server (z.B. einen Server eines Telematiksystems und/oder eines Telematikdienstes) und/oder ein Nutzfahrzeug mit der Vorrichtung gemäß dem ersten Aspekt der Erfindung umfassen kann.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1: eine schematische Darstellung einer Ausführungsform einer Telematikeinheit für ein Nutzfahrzeug gemäß dem ersten Aspekt der Erfindung
- Fig. 2: eine schematische Darstellung einer Ausführungsform einer Diagnose- und/oder Wartungsvorrichtung gemäß dem zweiten Aspekt der Erfindung;
- Fig. 3: eine schematische Darstellung einer beispielhaften Ausführungsform eines Systems gemäß dem dritten Aspekt der Erfindung;
- Fig. 4: ein Flussdiagramm eines Ausführungsbeispiels eines Verfahrens gemäß dem ersten Aspekt der Erfindung; und
- Fig. 5: ein Flussdiagramm eines Ausführungsbeispiels eines Verfahrens gemäß dem zweiten Aspekt der Erfindung.

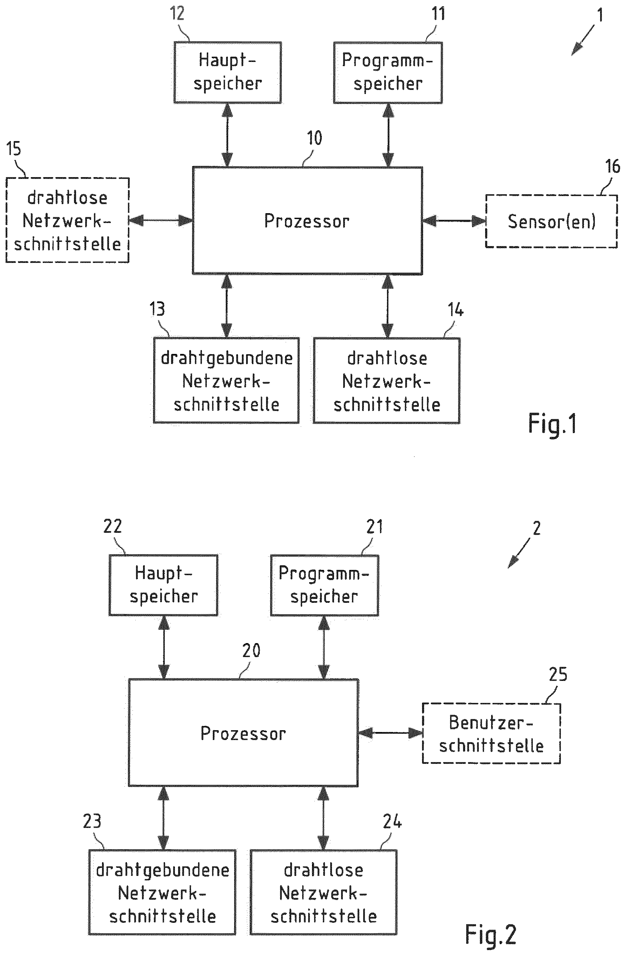

Fig. 1 ist eine schematische Darstellung einer beispielhaften Ausführungsform einer Telematikeinheit 1 für ein Nutzfahrzeug gemäß dem ersten Aspekt der Erfindung.

Die Telematikeinheit 1 umfasst beispielhaft einen Prozessor 10 und verbunden mit dem Prozessor 10 einen ersten Speicher als Programm- und Datenspeicher 11, einen zweiten Speicher als Hauptspeicher 12 sowie eine drahtgebundene Netzwerkschnittstelle 13 sowie eine erste drahtlose Netzwerkschnittstelle 14. Ferner kann das mobile Gerät 1 optional eine zweite drahtlose Netzwerkschnittstelle 15 und/oder einen oder mehrere Sensoren 16 umfassen.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Telematikeinheit 1 auch mehrere Prozessoren 10 umfassen kann.

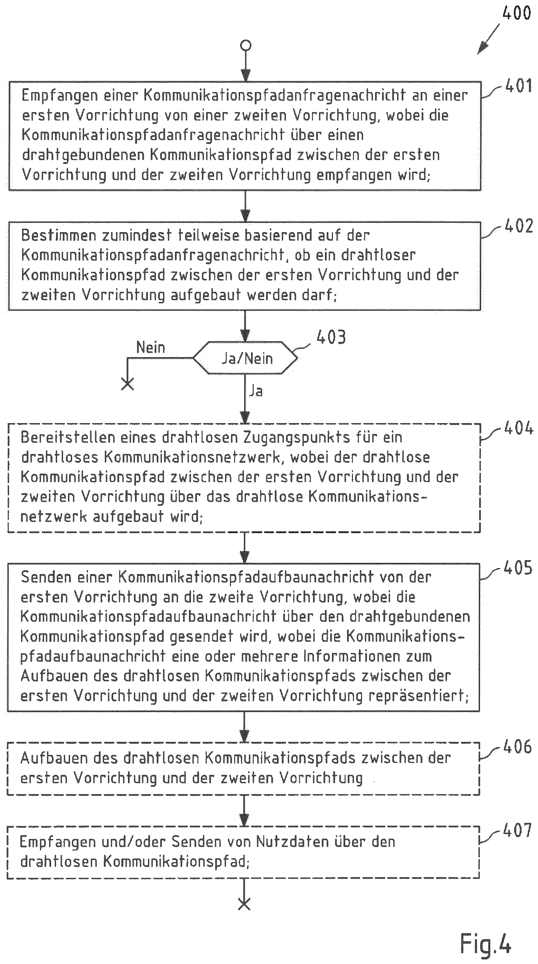

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines Computerprogramms gemäß dem ersten Aspekt der Erfindung, das Programmanweisungen umfasst, die den Prozessor 10 veranlassen, das Verfahren gemäß dem ersten Aspekt der Erfindung (z.B. das Verfahren gemäß dem in Fig. 4 dargestellten Flussdiagram 400) auszuführen und/oder zu steuern, wenn der Prozessor 10 diese in Programmspeicher 11 gespeicherten Programmanweisungen ausführt.

Programmspeicher 11 enthält ferner beispielsweise das Betriebssystem der Telematikeinheit 1, das beim Starten der Telematikeinheit 1 zumindest teilweise in Hauptspeicher 12 geladen und vom Prozessor 10 ausgeführt wird. Insbesondere wird beim Starten des mobilen Geräts 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Telematikeinheit 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

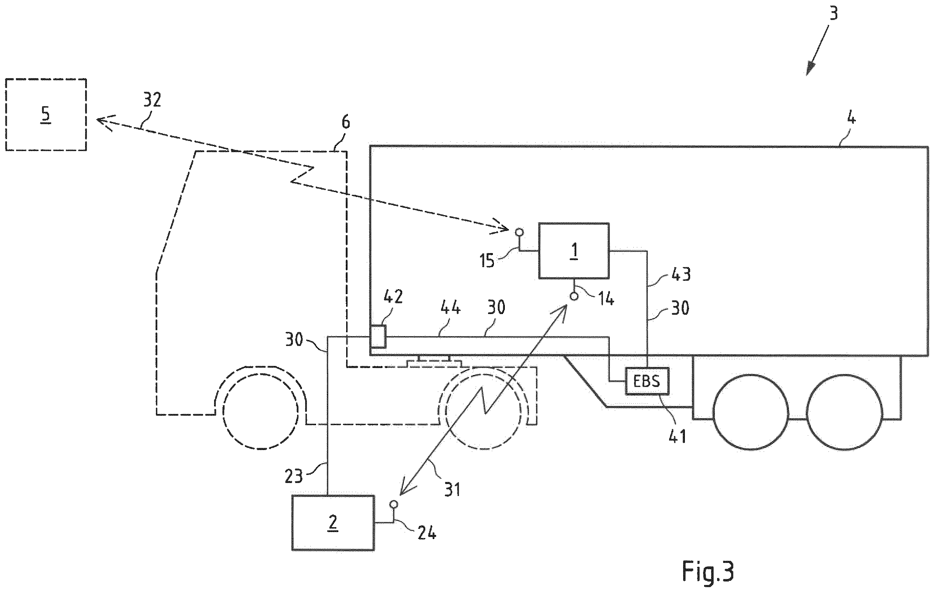

Prozessor 10 steuert die drahtgebundene Netzwerkschnittstelle 13, welche beispielsweise als CAN-, K-Leitungs- oder Flexray-Schnittstelle ausgebildet ist. Sie ist beispielsweise eingerichtet zur Kommunikation mit einer Diagnose- und/oder Wartungsvorrichtung (z.B. der in Fig. 3 dargestellten Diagnose- und/oder Wartungsvorrichtung 2) über ein CAN-, K-Leitungs- oder Flexray-Bussystem.

Eine drahtgebundene Netzwerkschnittstelle kann beispielsweise Informationen (über eine Verbindung in einem drahtgebundenen Kommunikationsnetzwerk) empfangen und an den Prozessor weiterleiten und/oder Informationen von dem Prozessor empfangen und (über eine Verbindung in einem drahtgebundenen Kommunikationsnetzwerk) senden. Ein Beispiel für eine drahtgebundene Netzwerkschnittstelle ist ein drahtgebundener Kommunikationsnetzwerkadapter. Zum Beispiel umfasst eine drahtgebundene Netzwerkschnittstelle neben einem Netzwerkanschluss (z.B. einem Stecker oder eine Buchse) zumindest eine Senderschaltung und eine Empfängerschaltung oder eine Sendeem pfängerschaltung.

Außerdem steuert Prozessor 10 die drahtlose Netzwerkschnittstelle 14, welche beispielsweise als Bluetooth-, WLAN- oder Zigbee-Schnittstelle ausgebildet ist. Sie ist beispielsweise eingerichtet zur Kommunikation mit einer Diagnose- und/oder Wartungsvorrichtung (z.B. der in Fig. 3 dargestellten Diagnose- und/oder Wartungsvorrichtung 2) über einen drahtlosen Kommunikationspfad (z.B. eine Netzwerkverbindung über ein WLAN-, Bluetooth- oder Zigbee-Kommunikationsnetzwerk). Ferner ist die drahtlose Netzwerkschnittstelle 14 beispielsweise eingerichtet, einen drahtlosen Zugangspunkt eines WLAN-, Bluetooth- oder Zigbee-Kommunikationsnetzwerks bereitzustellen.

Ferner kann Prozessor 10 die optionale drahtlose Netzwerkschnittstelle 15 steuern, welche beispielsweise als GSM-, UMTS- und/oder LTE-Schnittstelle ausgebildet ist. Sie ist beispielsweise eingerichtet zur Kommunikation mit einem entfernten Server (z.B. dem in Fig. 3 dargestellten Server 5 eines Telematikdienstes) über einen weiteren drahtlosen Kommunikationspfad (z.B. eine Netzwerkverbindung über ein GSM-, UMTS- und/oder LTE- Kommunikationsnetzwerk). Die GSM-, UMTS-und LTE-Spezifikationen werden von dem 3rd Generation Partnership Project (3GPP) gepflegt und entwickelt und sind derzeit im Internet unter anderem unter www.3gpp.com erhältlich.

Eine drahtlose Netzwerkschnittstelle kann beispielsweise Informationen (über eine Verbindung in einem drahtlosen Kommunikationsnetzwerk) empfangen und an den Prozessor weiterleiten und/oder Informationen von dem Prozessor empfangen und (über eine Verbindung in einem drahtlosen Kommunikationsnetzwerk) senden. Ein Beispiel für eine drahtlose Netzwerkschnittstelle ist ein drahtloser Kommunikationsnetzwerkadapter. Zum Beispiel umfasst eine drahtlose Netzwerkschnittstelle nebst einer Antenne zumindest eine Senderschaltung und eine Empfängerschaltung oder eine Sendeempfängerschaltung.

Darüber hinaus steuert Prozessor 10 den optionalen Sensor 16 oder die optionalen Sensoren 16. Diese dienen zum Beispiel zum Erfassen von Zustandsinformationen über das Nutzfahrzeug. Beispiele solcher Zustandsinformationen sind: Tankfüllstandinformationen, Reifendruckinformationen, Feuchtigkeitsinformationen, Temperaturinformationen, Türöffnungs- und -schließinformationen und/oder Positionsinformationen. Dementsprechend kann ein Tankfüllstandsensor, ein Reifendrucksensor, ein Feuchtigkeitssensor, ein Temperatursensor, ein Türöffnungs- und/oder - schließsensor und/oder ein Positionssensor Teil der Sensoren 16 sein. Alternativ oder zusätzlich ist auch denkbar, dass die Telematikeinheit 1 eine oder mehrere Schnittstellen zur Kommunikation mit solchen Sensoren 16 umfasst.

Die Komponenten 10 bis 16 des mobilen Geräts 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Telematikeinheit 1 neben den Komponenten 10 bis 16 weitere Komponenten wie beispielsweise eine Benutzerschnittstelle umfassen kann.

Fig. 2 ist eine schematische Darstellung einer beispielhaften Ausführungsform einer Diagnose- und/oder Wartungsvorrichtung 2 gemäß dem zweiten Aspekt der Erfindung.

Die Diagnose- und/oder Wartungsvorrichtung 2 umfasst beispielhaft einen Prozessor 20 und verbunden mit dem Prozessor 20 einen ersten Speicher als Programm- und Datenspeicher 21, einen zweiten Speicher als Hauptspeicher 22, eine drahtgebundene Netzwerkschnittstelle 23, eine drahtlose Netzwerkschnittstelle 24 und optional eine Benutzerschnittstelle 25.

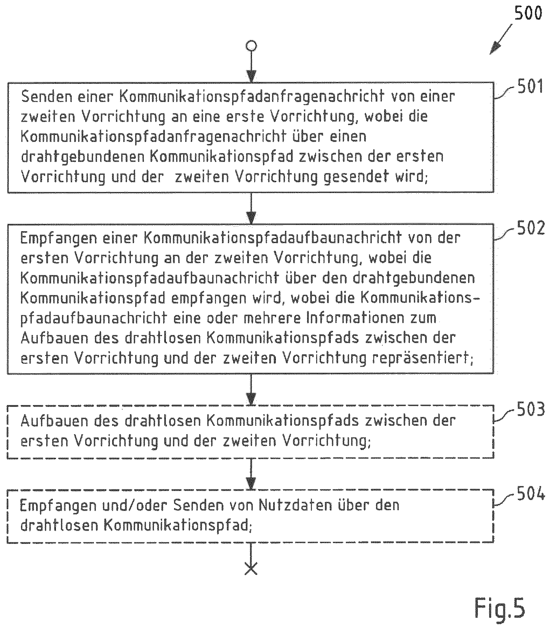

Prozessor 20 führt Programmanweisungen aus, die in Programmspeicher 21 gespeichert sind, und speichert beispielsweise Zwischenergebnisse oder ähnliches in Hauptspeicher 22. Die Diagnose-und/oder Wartungsvorrichtung 2 kann auch mehrere Prozessoren umfassen. Der Programmspeicher 21 enthält beispielsweise Programmanweisungen eines Computerprogramms gemäß dem zweiten Aspekt der Erfindung, das Programmanweisungen umfasst, die den Prozessor 20 veranlassen, das Verfahren gemäß dem zweiten Aspekt der Erfindung (z.B. das Verfahren gemäß dem in Fig. 5 dargestellten Flussdiagram 500) auszuführen und/oder zu steuern, wenn der Prozessor 20 diese in Programmspeicher 21 gespeicherten Programmanweisungen ausführt Programmspeicher 21 enthält ferner beispielsweise das Betriebssystem der Diagnose- und/oder Wartungsvorrichtung 2.

Es versteht sich, dass Hauptspeicher 22 und Programmspeicher 21 auch als ein Speicher ausgebildet sein können. Alternativ können Hauptspeicher 22 und/oder Programmspeicher 21 jeweils durch mehrere Speicher gebildet werden. Ferner können Hauptspeicher 22 und/oder Programmspeicher 21 auch Teil des Prozessors 20 sein.

Prozessor 20 steuert die drahtgebundene Netzwerkschnittstelle 23, welche beispielsweise als CAN-, K-Leitungs- oder Flexray-Schnittstelle ausgebildet ist. Sie ist beispielsweise eingerichtet zur Kommunikation mit einer Telematikeinheit eines Nutzfahrzeugs (z.B. der in Fig. 3 dargestellten Telematikeinheit 1) über ein CAN-, K-Leitungs- oder Flexray-Bussystem. Hierzu weist die drahtgebundene Netzwerkschnittstelle 23 beispielsweise eine Diagnoseschnittstelle, die zu einer Diagnoseschnittstelle des Nutzfahrzeugs korrespondiert, (z.B. einen OBD-2 Diagnosestecker) auf.

Ferner steuert Prozessor 20 die drahtlose Netzwerkschnittstelle 24, welche beispielsweise als Bluetooth-, WLAN- oder Zigbee-Schnittstelle ausgebildet ist. Die drahtlose Netzwerkschnittstelle 24 ist beispielsweise eingerichtet zur Kommunikation mit einer Telematikeinheit (z.B. der in Fig. 3 dargestellten Telematikeinheit 1) über einen drahtlosen Kommunikationspfad (z.B. eine Netzwerkverbindung über ein WLAN-, Bluetooth- oder Zigbee-Kommunikationsnetzwerk).

Optional umfasst die Diagnose- und/oder Wartungsvorrichtung 2 eine Benutzerschnittstelle 25. Die Benutzerschnittstelle 25 dient beispielsweise zur Ausgabe von Informationen an einen Benutzer und/oder zum Erfassen von Eingaben eines Benutzers. Wie oben offenbart, kann eine Benutzerschnittstelle eine Tastatur, eine Maus, einen Bildschirm, einen berührungsempfindlichen Bildschirm, einen Lautsprecher, ein Mikrofon, usw. sein.

Die Komponenten 20 bis 25 der Diagnose- und/oder Wartungsvorrichtung 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Diagnose- und/oder Wartungsvorrichtung 2 neben den Komponenten 20 bis 25 weitere Komponenten umfassen kann.

Fig. 3 ist eine schematische Darstellung einer beispielhaften Ausführungsform eines Systems 3 gemäß dem dritten Aspekt der Erfindung.

Das System 3 umfasst unter anderem die Telematikeinheit 1, welche in einem Sattelauflieger 4 als Beispiel für ein Nutzfahrzeug angeordnet ist, die Diagnose- und/oder Wartungsvorrichtung 2 sowie optional Server 5.

Beispielhaft sind in Fig. 3 das elektronische Bremssystem (EBS) 41 und die Diagnoseschnittstelle 42 als weitere Komponenten des Sattelaufliegers 4 dargestellt. Ferner weist der Sattelauflieger ein CAN-, K-Leitungs- oder Flexray-Bussystem mit den drahtgebundenen Netzwerkverbindungen 43 und 44 auf, über die die Telematikeinheit 1 (mit dem elektronischen Bremssystem 41 als Zwischenstation) mit der Diagnoseschnittstelle 42 (z.B. einer OBD-2-Diagnosebuchse) verbunden ist. Im Folgenden wird beispielhaft davon ausgegangen, dass es sich um ein CAN-Bussystem handelt.

Ferner ist die die Netzwerkschnittstelle 23 (z.B. durch eine zu der Diagnoseschnittstelle 42 korrespondierende Diagnoseschnittstelle der Netzwerkschnittstelle 23 wie ein OBD-2-Diagnosestecker) der Diagnose- und/oder Wartungsvorrichtung 2 ist mit der Diagnoseschnittstelle 42 verbunden, so dass ein drahtgebundener Kommunikationspfad 30, der über das elektronische Bremssystem 41, die Diagnoseschnittstelle 42 sowie die Netzwerkverbindungen 43 und 44 verläuft, zwischen der Telematikeinheit 1 und der Diagnose- und/oder Wartungsvorrichtung 2 besteht. Die Datenrate des drahtgebundenen Kommunikationspfads 30 wird durch das CAN-Bussystem und das Weiterleiten durch Zwischenstationen wie das das elektronische Bremssystem 41 begrenzt und beträgt beispielsweise weniger oder gleich 125 kBit/s, so dass er für die Übertragung größerer Datenmengen nicht geeignet ist.

Wird er dennoch für die Übertragung größerer Datenmengen z.B. im Rahmen von Wartungs- und/oder Diagnoseaufgaben genutzt, hat dies folgende Konsequenzen:
- Es kann zu langen Warte-/Standzeiten des Sattelaufliegers 4 und hierdurch erhöhten Kosten für die Durchführung von Wartungs- und/oder Diagnoseaufgaben kommen.
- Wenn die Wartungs- und/oder Diagnoseaufgaben im Rahmen der Produktion des Sattelaufliegers 4 durchgeführt werden, kann es zur Überschreitung der für die Produktion vorgesehenen Taktzeiten kommen.

Darüber hinaus ist in Fig. 3 ein drahtloser Kommunikationspfad 31 zwischen der Telematikeinheit 1 und der Diagnose- und/oder Wartungsvorrichtung 2, beispielsweise zwischen der drahtlosen Netzwerkschnittstelle 14 der Telematikeinheit 1 und der drahtlosen Netzwerkschnittstelle 24 der Diagnose- und/oder Wartungsvorrichtung 2. Der drahtlose Kommunikationspfad 31 ist beispielsweise eine Netzwerkverbindung über ein WLAN-, Bluetooth- oder Zigbee-Kommunikationsnetzwerk. Zum Beispiel stellt die Netzwerkschnittstelle 14 der Telematikeinheit 1 einen drahtlosen Zugangspunkt für dieses Kommunikationsnetzwerk bereit.

Im Folgenden wird beispielhaft angenommen, dass der drahtlosen Kommunikationspfad 31 eine Netzwerkverbindung über ein WLAN- Kommunikationsnetzwerk ist Der Aufbau dieses drahtlosen Kommunikationspfads 31 wird unten beispielhaft anhand der Flussdiagramme 400 (vgl. Fig. 4) und 500 (vgl. Fig. 5) erläutert.

Der Server 5 ist ein Server eines Telematikdienstes und ist beispielsweise eingerichtet zum Bereitstellen einer Benutzeroberfläche für Benutzer des Telematikdienstes. Zum Beispiel kann ein Benutzer des Telematikdienstes über das Internet auf die Benutzeroberfläche zugreifen und Zustandsinformationen seiner Nutzfahrzeuge, die mit entsprechenden Telematikeinheiten (z.B. der Telematikeinheit 1) ausgestattet sind, abrufen und/oder die Telematikeinheiten seiner Nutzfahrzeuge konfigurieren (z.B. eine Kennung eines drahtlosen Zugangspunkts und/oder eines drahtlosen Kommunikationsnetzwerks und/oder einen Schlüssel für einen drahtlosen Zugangspunkt und/oder ein drahtloses Kommunikationsnetzwerk einstellen und/oder ändern). Zu diesem Zweck ist in System 3 ein drahtloser Kommunikationspfad 32 zwischen der Telematikeinheit 1 und dem Server 5 dargestellt Über den drahtlosen Kommunikationspfad 32 kann die Telematikeinheit 1 erfasste Zustandsinformationen des Sattelaufliegers 4 an den Server 5 senden und Konfigurationsinformationen von dem Server 5 empfangen. Der drahtlosen Kommunikationspfad 32 ist zum Beispiel eine Netzwerkverbindung über ein GSM-, UMTS-und/oder LTE- Kommunikationsnetzwerk.

Es versteht sich, dass die drahtlosen Kommunikationspfade 31 und 32 nicht ausschließlich drahtlos verlaufen müssen, sondern beispielsweise eine oder mehrere drahtlose Abschnitte (z.B. zwischen der Telematikeinheit 1 und einer Basisstation und/oder zwischen einem drahtlosen Zugangspunkt und der Diagnose- und/oder Wartungsvorrichtung 2) und eine oder mehrere drahtgebundene Abschnitte (z.B. zwischen der Basisstation und dem Server 5 und/oder zwischen dem drahtlosen Zugangspunkt und der Telematikeinheit 1) umfassen können.

Fig. 4 zeigt ein Flussdiagramm 400 eines Ausführungsbeispiels eines Verfahrens gemäß dem ersten Aspekt der Erfindung. Im Folgenden wird beispielhaft angenommen, dass die Schritte 401 bis 407 des Flussdiagramms 400 zumindest teilweise durch die Telematikeinheit 1 in System 3 (vgl. Fig. 3) ausgeführt werden.

In einem Schritt 401 wird eine Kommunikationspfadanfragenachricht an der Telematikeinheit 1 von der Diagnose- und/oder Wartungsvorrichtung 2 empfangen, wobei die Kommunikationspfadanfragenachricht über den drahtgebundenen Kommunikationspfad 30 empfangen wird (z.B. durch die drahtgebundene Netzwerkschnittstelle 13 der Telematikeinheit 1 empfangen wird).

Die Kommunikationspfadanfragenachricht kann beispielsweise eine Berechtigungsnachweisinformation zum Aufbauen des drahtlosen Kommunikationspfads 31 repräsentieren. Zum Beispiel weist die Berechtigungsnachweisinformation eine Berechtigung der Diagnose- und/oder Wartungsvorrichtung 2 zum Aufbauen des drahtlosen Kommunikationspfads 31 nach. Wie oben im Detail offenbart, ist ein Beispiel für eine solche Berechtigungsnachweisinformation ein Berechtigungsschlüssel, eine digitale Signatur und/oder eine Antwort im Rahmen eines Challenge-Response-Verfahrens. Im Folgenden wird beispielhaft davon ausgegangen, dass die Kommunikationspfadanfragenachricht zumindest einen Berechtigungsschlüssel (als Berechtigungsnachweisinformation) repräsentiert.

Die Telematikeinheit 1 ist beispielsweise eingerichtet, wenn sie in Schritt 401 eine Kommunikationspfadanfrage empfängt, zu bestimmen, ob der drahtlose Kommunikationspfad 31 zwischen der Telematikeinheit 1 und der Diagnose- und/oder Wartungsvorrichtung 2 aufgebaut werden darf, und/oder zu veranlassen, dass bestimmt wird, ob der drahtlose Kommunikationspfad 31 zwischen der Telematikeinheit 1 und der Diagnose- und/oder Wartungsvorrichtung 2 aufgebaut werden darf.

Dementsprechend wird in einem optionalen Schritt 402 zumindest teilweise basierend auf der in Schritt 401 empfangenen Kommunikationspfadanfragenachricht bestimmt, ob der drahtlose Kommunikationspfad 31 zwischen der Telematikeinheit 1 und der Diagnose- und/oder Wartungsvorrichtung 2 aufgebaut werden darf.

Das Bestimmen in Schritt 402 kann beispielsweise durch die Telematikeinheit 1 durchgeführt werden. Zum Beispiel veranlasst die Kommunikationspfadanfragenachricht die Telematikeinheit 1 zu bestimmen, ob der drahtlose Kommunikationspfad 31 zwischen der Telematikeinheit 1 und der Diagnose- und/oder Wartungsvorrichtung 2 aufgebaut werden darf. Es kann jedoch auch vorgesehen sein, dass das Bestimmen durch den Server 5 durchgeführt wird. Zu diesem Zweck kann die Telematikeinheit 1 zumindest den durch die Kommunikationspfadanfragenachricht repräsentierten Berechtigungsschlüssel in Schritt 402 über den drahtlosen Kommunikationspfad 32 an den Server 5 senden. Zum Beispiel veranlasst die Kommunikationspfadanfragenachricht die Telematikeinheit 1, zumindest den durch die Kommunikationspfadanfragenachricht repräsentierten Berechtigungsschlüssel über den drahtlosen Kommunikationspfad 32 an den Server 5 zu senden. Anschließend kann die Telematikeinheit 1 das Ergebnis des Bestimmens in Schritt 402 über den Kommunikationspfad 32 von dem Server 5 empfangen.

Dass das Bestimmen, ob der drahtlose Kommunikationspfad 31 zwischen der Telematikeinheit 1 und der Diagnose- und/oder Wartungsvorrichtung 2 aufgebaut werden darf, zumindest teilweise auf der Kommunikationspfadanfragenachricht basiert, soll beispielsweise so verstanden werden, dass die Kommunikationspfadanfragenachricht eine oder mehrere Informationen repräsentiert, die bei dem Bestimmen berücksichtigt werden. Zum Beispiel kann in Schritt 402 geprüft werden, ob eine von der Kommunikationspfadanfragenachricht repräsentierte Berechtigungsnachweisinformation eine Berechtigung der Diagnose- und/oder Wartungsvorrichtung 2 zum Aufbauen des drahtlosen Kommunikationspfads 31 nachweist.

Wenn die Berechtigungsnachweisinformation ein Berechtigungsschlüssel (z.B. ein Passwort oder eine Passphrase) ist, kann zum Beispiel vorgegeben sein, dass das Bestimmen ergibt, dass der drahtlose Kommunikationspfad 31 zwischen der ersten Vorrichtung und der zweiten Vorrichtung aufgebaut werden darf, wenn das Prüfen ergibt, dass die Kommunikationspfadanfragenachricht einen zuvor festgelegten Berechtigungsschlüssel repräsentiert. Zum Beispiel befindet sich eine Repräsentation dieses zuvor festgelegten Berechtigungsschlüssels in einem Speicher der Vorrichtung (z.B. Telematikeinheit 1 oder Server 5), die das Bestimmen in Schritt 401 durchführt. Wenn zum Beispiel ein Prüfen des durch die in Schritt 401 empfangene Kommunikationspfadanfragenachricht repräsentierten Berechtigungsschlüssels ergibt, dass dieser Berechtigungsschlüssel mit dem zuvor festgelegten Berechtigungsschlüssel übereinstimmt (z.B. durch einen Vergleich mit der in dem Speicher gespeicherten Repräsentation des zuvor festgelegten Berechtigungsschlüssels), ergibt das Bestimmen in Schritt 402 beispielsweise, dass der drahtlose Kommunikationspfad 31 zwischen der Telematikeinheit 1 und der Diagnose- und/oder Wartungsvorrichtung 2 aufgebaut werden darf. Andernfalls wird in Schritt 402 beispielsweise bestimmt, dass kein drahtloser Kommunikationspfad zwischen der Telematikeinheit 1 und der Diagnose- und/oder Wartungsvorrichtung 2 aufgebaut werden darf. Dies ist beispielsweise vorteilhaft, um sicherzustellen, dass die Telematikeinheit 1 einen drahtlosen Kommunikationspfad nicht mit jeder Vorrichtung, sondern nur mit bestimmten Diagnose- und/oder Wartungsvorrichtungen (z.B. nur für die Durchführung von Diagnose- und/oder Wartungsaufgaben zugelassene Diagnose- und/oder Wartungsvorrichtungen) aufbaut. Zum Beispiel wird davon ausgegangen, dass nur solche Diagnose- und/oder Wartungsvorrichtungen den Berechtigungsschlüssel kennen.

Wenn in Schritt 402 bestimmt wird, dass kein drahtloser Kommunikationspfad zwischen der Telematikeinheit 1 und der Diagnose- und/oder Wartungsvorrichtung 2 aufgebaut werden darf, wird das Flussdiagramm im optionalen Schritt 403 beispielsweise beendet

Wenn dagegen in Schritt 402 bestimmt wird, dass der drahtlose Kommunikationspfad 31 zwischen der Telematikeinheit 1 und der Diagnose- und/oder Wartungsvorrichtung 2 aufgebaut werden darf, wird das Flussdiagramm mit einem optionalen Schritt 404 oder Schritt 405 fortgesetzt.

Die Schritte 402 und 403 sind optional. Es versteht sich daher, dass die Erfindung auch Ausführungsformen umfasst, die ohne die Schritte 402 und 403 auskommen und bei denen sich an Schritt 401 beispielsweise der optionale Schritt 404 oder Schritt 405 anschließt.

In dem optionalen Schritt 404 wird der drahtlose Zugangspunkt für das drahtlose Kommunikationsnetzwerk durch die drahtlose Netzwerkschnittstelle 14 der Telematikeinheit 1 bereitgestellt, über das der drahtlose Kommunikationspfad 31 aufgebaut wird. Alternativ kann auch vorgesehen sein, dass der drahtlose Zugangspunkt unabhängig davon, ob in Schritt 402 bestimmt wird, dass der drahtlose Kommunikationspfad 31 zwischen der Telematikeinheit 1 und der Diagnose- und/oder Wartungsvorrichtung 2 aufgebaut werden darf, durch die drahtlose Netzwerkschnittstelle 14 der Telematikeinheit 1 bereitgestellt wird (z.B. dauerhaft bereitgestellt wird), so dass Schritt 404 entfällt

Dabei soll unter dem Bereitstellen des drahtlosen Zugangspunkts beispielsweise verstanden werden, dass der drahtlose Zugangspunkt für das WLAN-Kommunikationsnetzwerk aktiviert wird, so dass der drahtlose Kommunikationspfad 31 über das WLAN-Kommunikationsnetzwerk aufgebaut werden kann.

In Schritt 405 wird eine Kommunikationspfadaufbaunachricht von der Telematikeinheit 1 an die Diagnose- und/oder Wartungsvorrichtung 2 gesendet, wobei die Kommunikationspfadaufbaunachricht über den drahtgebundenen Kommunikationspfad 30 gesendet wird (z.B. durch die drahtgebundene Netzwerkschnittstelle 13 der Telematikeinheit 1 gesendet wird), und wobei die Kommunikationspfadaufbaunachricht eine oder mehrere Informationen zum Aufbauen des drahtlosen Kommunikationspfads 31 zwischen der Telematikeinheit 1 und der Diagnose- und/oder Wartungsvorrichtung 2 repräsentiert

Wie oben offenbart, soll unter einer solchen Information zum Aufbauen des drahtlosen Kommunikationspfads 31 zwischen der Telematikeinheit 1 und der Diagnose- und/oder Wartungsvorrichtung 2 beispielsweise eine Information verstanden werden, die die Diagnose- und/oder Wartungsvorrichtung 2 benötigt, um den drahtlosen Kommunikationspfad 31 aufbauen zu können.

Im Folgenden wird beispielhaft davon ausgegangen, dass die Kommunikationspfadaufbaunachricht eine Kennung (z.B. eine SSID oder BSSID) eines drahtlosen Zugangspunkts und/oder eines drahtlosen Kommunikationsnetzwerks sowie einen Schlüssel (z.B. ein Passwort und/oder ein Passphrase) für den drahtlosen Zugangspunkt und/oder das drahtlose Kommunikationsnetzwerk repräsentieren. Bei dem drahtlosen Zugangspunkt handelt es sich beispielsweise um den in Schritt 404 bereitgestellten drahtlosen Zugangspunkt des WLAN-Kommunikationsnetzwerks, über das der drahtlose Kommunikationspfad 31 aufgebaut wird; und bei dem drahtlosen Kommunikationsnetzwerk handelt es sich beispielsweise um das WLAN-Kommunikationsnetzwerk, über das der drahtlose Kommunikationspfad 31 aufgebaut wird. Wenn das drahtlose Kommunikationsnetzwerk ein WLAN-Kommunikationsnetzwerk mit einer WPA- oder WPA2-Verschlüsselung ist, benötigt die Diagnose- und/oder Wartungsvorrichtung 2 beispielsweise eine SSID oder BSSID, um den drahtlosen Zugangspunkt und/oder das drahtlose Kommunikationsnetzwerk identifizieren zu können, und ein Passwort oder eine Passphrase gemäß dem WPA- oder dem WPA2-Standard, um sich gegenüber dem drahtlosen Zugangspunkt und/oder dem drahtlosen Kommunikationsnetzwerk authentisieren zu können. Gerade in Umgebungen mit einer Vielzahl weiterer WLAN-Kommunikationsnetzwerke ist das übermitteln der SSID oder BSSID an die Diagnose- und/oder Wartungsvorrichtung 2 beispielsweise vorteilhaft, um sicherzustellen, dass die Diagnose- und/oder Wartungsvorrichtung 2, auch das richtige WLAN-Kommunikationsnetzwerk und/oder den richtigen drahtlosen Zugangspunkt für den Aufbau des drahtlosen Kommunikationspfads 31 verwendet. Auch wird die Diagnose- und/oder Wartungsvorrichtung 2 durch das Übermitteln des Passworts oder der Passphrase erst in die Lage versetzt, sich authentisieren und somit den drahtlosen Kommunikationspfad aufbauen zu können.

Anschließend wird in einem optionalen Schritt 406 der drahtlose Kommunikationspfad 31 aufgebaut. Dabei soll unter dem Aufbauen des drahtlosen Kommunikationspfads 31 das Herstellen und/oder das Aushandeln einer Netzwerkverbindung über das WLAN-Kommunikationsnetzwerk verstanden werden. Zum Beispiel umfasst das Aufbauen des drahtlosen Kommunikationspfads 31 in Schritt 406 zumindest das Authentifizieren der Diagnose- und/oder Wartungsvorrichtung 2 durch die Telematikeinheit 1 (z.B. den durch die drahtlose Netzwerkschnittstelle 14 der Telematikeinheit 1 bereitgestellten drahtlosen Zugangspunkt). Das Authentifizieren der Diagnose- und/oder Wartungsvorrichtung 2 durch die Telematikeinheit 1 (z.B. den durch die drahtlose Netzwerkschnittstelle 14 der Telematikeinheit 1 bereitgestellten drahtlosen Zugangspunkt) kann beispielsweise Teil eines WPA- oder WPA2-Handshakes sein.

In einem optionalen Schritt 407 werden Nutzdaten über den in Schritt 406 aufgebauten Kommunikationspfad 31 empfangen und/oder gesendet (z.B. durch die drahtlose Netzwerkschnittstelle 14 der Telematikeinheit 1 empfangen und/oder gesendet). Es versteht sich, dass der drahtgebundene Kommunikationspfad 30 gleichzeitig zur Übertragung von Daten (z.B. Steuer- und/oder Verifizierungsdaten) genutzt werden kann.

Fig. 5 zeigt ein Flussdiagramm 500 eines Ausführungsbeispiels eines Verfahrens gemäß dem zweiten Aspekt der Erfindung. Im Folgenden wird beispielhaft angenommen, dass die Schritte 501 bis 504 des Flussdiagramms 500 durch die Diagnose- und/oder Wartungsvorrichtung 2 in System 3 (vgl. Fig. 3) ausgeführt werden.

In einem Schritt 501 wird eine Kommunikationspfadanfragenachricht von der Diagnose- und/oder Wartungsvorrichtung 2 an die Telematikeinheit 1 gesendet, wobei die Kommunikationspfadanfragenachricht über den drahtgebundenen Kommunikationspfad 30 gesendet wird (z.B. durch die drahtgebundene Netzwerkschnittstelle 23 der Diagnose- und/oder Wartungsvorrichtung 2 gesendet wird). Die in Schritt 501 gesendete Kommunikationspfadanfragenachricht entspricht beispielsweise der in Schritt 401 an der Telematikeinheit 1 empfangenen Kommunikationspfadanfragenachricht.

In einem Schritt 502 wird eine Kommunikationspfadaufbaunachricht von der Telematikeinheit 1 an der Diagnose- und/oder Wartungsvorrichtung 2 empfangen, wobei die Kommunikationspfadaufbaunachricht über den drahtgebundenen Kommunikationspfad 30 empfangen wird (z.B. durch die drahtgebundene Netzwerkschnittstelle 23 der Diagnose- und/oder Wartungsvorrichtung 2 empfangen wird), wobei die Kommunikationspfadaufbaunachricht eine oder mehrere Informationen zum Aufbauen des drahtlosen Kommunikationspfads zwischen der ersten Vorrichtung und der zweiten Vorrichtung repräsentiert. Die in Schritt 502 empfangene Kommunikationspfadaufbaunachricht entspricht beispielsweise der in Schritt 405 von der Telematikeinheit 1 gesendeten Kommunikationspfadaufbaunachricht.

Anschließend wird in einem optionalen Schritt 503 der drahtlose Kommunikationspfad 31 aufgebaut. Dabei soll unter dem Aufbauen des drahtlosen Kommunikationspfads 31 das Herstellen und/oder das Aushandeln einer Netzwerkverbindung über das WLAN-Kommunikationsnetzwerk verstanden werden.

Zum Beispiel umfasst das Aufbauen des drahtlosen Kommunikationspfads 31 in Schritt 503 zumindest das Authentisieren der Diagnose- und/oder Wartungsvorrichtung 2 gegenüber der Telematikeinheit 1 (z.B. gegenüber dem durch die drahtlose Netzwerkschnittstelle 14 der Telematikeinheit 1 in Schritt 404 bereitgestellten drahtlosen Zugangspunkt). Das Authentisieren der Diagnose- und/oder Wartungsvorrichtung 2 gegenüber der Telematikeinheit 1 (z.B. gegenüber dem durch die drahtlose Netzwerkschnittstelle 14 der Telematikeinheit 1 in Schritt 404 bereitgestellten drahtlosen Zugangspunkt) kann beispielsweise Teil eines WPA- oder WPA2-Handshakes sein.

In einem optionalen Schritt 504 werden Nutzdaten über den in Schritt 406 aufgebauten Kommunikationspfad 31 empfangen und/oder gesendet (z.B. durch die drahtlose Netzwerkschnittstelle 24 der Diagnose- und/oder Wartungsvorrichtung 2 empfangen und/oder gesendet). Es versteht sich, dass der drahtgebundene Kommunikationspfad 30 gleichzeitig zur Übertragung von Daten (z.B. Steuer-und/oder Verifizierungsdaten) genutzt werden kann.

Die vorliegende Erfindung ermöglicht somit den Aufbau des drahtlosen Kommunikationspfads 31 zwischen der Telematikeinheit 1 und der Diagnose- und/oder Wartungsvorrichtung 2 für die Übertragung größerer Datenmengen z.B. im Rahmen von Wartungs- und/oder Diagnoseaufgaben. Dabei wird eine hohe Sicherheit und Effizienz beim Aufbau des drahtlosen Kommunikationspfads 31 durch die Übertragung der Kommunikationspfadanfragenachricht und der Kommunikationspfadaufbaunachricht über den drahtgebundenen Kommunikationspfad 30 ermöglicht. Aus der kombinierten Verwendung des drahtlosen Kommunikationspfads 31 und des drahtgebundenen Kommunikationspfads 30 ergeben sich unter anderem die folgenden Vorteile:
- einfache benutzerfreundliche Handhabung aus Sicht des Kunden: Ohne den drahtgebundenen Kommunikationspfad 30 müsste der Benutzer alle Schlüssel und Kennungen (z.B. Passwörter oder Passphrasen und SSID oder BSSID) der drahtlosen Zugangspunkte kennen, mit denen er eine Verbindung aufbauen möchte (z.B. für ein Software Update). Über den drahtgebundenen Kommunikationspfad 30 können diese Informationen (z.B. verschlüsselt) übertragen und dem Benutzer anschließend angezeigt oder auch für einen automatischen Aufbau des drahtlosen Kommunikationspfads 31 genutzt werden.
- hohe Sicherheit: Über den drahtgebundenen Kommunikationspfad 30 kann der Aufbau des drahtlosen Kommunikationspfads 31 (z.B. mit erweiterten Diagnose-Rechten) ausgelöst werden, so dass das Bereitstellen des drahtlosen Zugangspunkt auf den zeitlichen Zeitraum eingegrenzt wird, in dem der drahtgebundene Kommunikationspfad 30 besteht (z.B. solange die Diagnose-und/oder Wartungsvorrichtung 2 mit der Telematikeinheit 1 über den drahtgebundenen Kommunikationspfad 30 verbunden ist). Außerdem kann durch den Austausch von Informationen über den drahtgebundenen Kommunikationspfad 30 sichergestellt werden, dass die Diagnose- und/oder Wartungsvorrichtung 2 den drahtlosen Kommunikationspfad 31 mit oder über den richtigen drahtlosen Zugangspunkt aufbaut.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Aufbauen eines drahtlosen Kommunikationspfades (31) zwischen einer ersten Vorrichtung (1) für ein Nutzfahrzeug und einer zweiten Vorrichtung (2), das Verfahren umfassend:
- Empfangen (401) einer Kommunikationspfadanfragenachricht von der zweiten Vorrichtung an der ersten Vorrichtung, wobei die Kommunikationspfadanfragenachricht an der ersten Vorrichtung (1) über einen drahtgebundenen Kommunikationspfad (30) zwischen der ersten Vorrichtung (1) und der zweiten Vorrichtung (2) empfangen wird;
- Senden (405) einer Kommunikationspfadaufbaunachricht von der ersten Vorrichtung (1) an die zweite Vorrichtung (2), wobei die Kommunikationspfadaufbaunachricht über den drahtgebundenen Kommunikationspfad (30) gesendet wird, und wobei die Kommunikationspfadaufbaunachricht eine oder mehrere Informationen zum Aufbauen des drahtlosen Kommunikationspfads (31) zwischen der ersten Vorrichtung (1) und der zweiten Vorrichtung (2) repräsentiert.

2. Verfahren nach Anspruch 1, das Verfahren ferner umfassend:
- Bestimmen (402) zumindest teilweise basierend auf der Kommunikationspfadanfragenachricht, ob der drahtlose Kommunikationspfad (31) zwischen der ersten Vorrichtung (1) und der zweiten Vorrichtung (2) aufgebaut werden darf, wobei die Kommunikationspfadaufbaunachricht nur dann von der ersten Vorrichtung (1) an die zweite Vorrichtung (2) gesendet wird, wenn bestimmt wird, dass der drahtlose Kommunikationspfad (31) zwischen der ersten Vorrichtung (1) und der zweiten Vorrichtung (2) aufgebaut werden darf.

3. Verfahren nach Anspruch 2, wobei die Kommunikationspfadanfragenachricht zumindest eine Berechtigungsnachweisinformation zum Aufbauen des drahtlosen Kommunikationspfads (31) repräsentiert, und wobei das Bestimmen, ob ein drahtloser Kommunikationspfad (31) zwischen der ersten Vorrichtung (1) und der zweiten Vorrichtung (2) aufgebaut werden darf, das Prüfen der Berechtigungsnachweisinformation umfasst.

4. Verfahren nach einem der Ansprüche 1 bis 3, das Verfahren ferner umfassend:
- Bereitstellen (404) eines drahtlosen Zugangspunkts für ein drahtloses Kommunikationsnetzwerk, wobei der drahtlose Kommunikationspfad (31) zwischen der ersten Vorrichtung und der zweiten Vorrichtung über das drahtlose Kommunikationsnetzwerk aufgebaut wird.

5. Verfahren nach einem der Ansprüche 1 bis 4, wobei die Kommunikationspfadaufbaunachricht zumindest eine der folgenden Informationen repräsentiert:
- eine Kennung eines drahtlosen Zugangspunkts und/oder eines drahtlosen Kommunikationsnetzwerks,
- einen Schlüssel für einen drahtlosen Zugangspunkt und/oder ein drahtloses Kommunikationsnetzwerk.

6. Verfahren nach einem der Ansprüche 1 bis 5, das Verfahren ferner umfassend:
- Empfangen und/oder Senden von Nutzdaten über den drahtlosen Kommunikationspfad (31).

7. Verfahren nach Anspruch 6, das Verfahren ferner umfassend:
- Empfangen und/oder Senden von Verifizierungsdaten über den drahtgebundenen Kommunikationspfad (30) zum Verifizieren der über den drahtlosen Kommunikationspfad (31) empfangenen und/oder gesendeten Nutzdaten.

8. Verfahren nach einem der Ansprüche 1 bis 7, wobei die maximale Datenübertragungsrate über den drahtgebundenen Kommunikationspfad (30) geringer ist als die maximale Datenübertragungsrate über den drahtlosen Kommunikationspfad (31).

9. Verfahren nach einem der Ansprüche 1 bis 8, wobei die Datenübertragung über den drahtgebundenen Kommunikationspfad gemäß einem der folgenden Kommunikationsstandards erfolgt: Ethernet-Kommunikationsstandard, CAN- Kommunikationsstandard, K-Leitungs-Kommunikationsstandard oder FlexRay- Kommunikationsstandard; und/oder wobei die Datenübertragung über den drahtlosen Kommunikationspfad gemäß einem der folgenden Kommunikationsstandards erfolgt: WLAN-Kommunikationsstandard, Zigbee-Kommunikationsstandard oder Bluetooth-Kommunikationsstandard.

10. Verfahren nach einem der Ansprüche 1 bis 9, wobei die erste Vorrichtung (1) eine Telematikeinheit für ein Nutzfahrzeug ist, und wobei die zweite Vorrichtung (2) eine Diagnose-und/oder Wartungsvorrichtung ist.

11. Vorrichtung, insbesondere Telematikvorrichtung, für ein Nutzfahrzeug, wobei die Vorrichtung eingerichtet ist zur Ausführung und/oder Steuerung des Verfahrens nach einem der Ansprüche 1 bis 10 oder umfassend jeweilige Mittel (10-16) zur Ausführung und/oder Steuerung der Schritte des Verfahrens nach einem der Ansprüche 1 bis 10.

12. Verfahren zum Aufbauen eines drahtlosen Kommunikationspfades (31) zwischen einer ersten Vorrichtung (1) für ein Nutzfahrzeug und einer zweiten Vorrichtung (2), das Verfahren umfassend:
- Senden (501) einer Kommunikationspfadanfragenachricht von der zweiten Vorrichtung (2) an die erste Vorrichtung (1), wobei die Kommunikationspfadanfragenachricht über einen drahtgebundenen Kommunikationspfad (30) zwischen der ersten Vorrichtung (1) und der zweiten Vorrichtung (2) gesendet wird;
- Empfangen (502) einer Kommunikationspfadaufbaunachricht von der ersten Vorrichtung (1) an der zweiten Vorrichtung (2), wobei die Kommunikationspfadaufbaunachricht über den drahtgebundenen Kommunikationspfad (30) empfangen wird, und wobei die Kommunikationspfadaufbaunachricht eine oder mehrere Informationen zum Aufbauen des drahtlosen Kommunikationspfads (31) zwischen der ersten Vorrichtung und der zweiten Vorrichtung repräsentiert.

13. Vorrichtung, wobei die Vorrichtung eingerichtet ist zur Ausführung und/oder Steuerung des Verfahrens nach Anspruch 12 oder umfassend jeweilige Mittel (20-25) zur Ausführung und/oder Steuerung der Schritte des Verfahrens nach Anspruch 12.

14. Computerprogramm, umfassend Programmanweisungen, die dazu ausgebildet sind, bei Ausführung durch mindestens einen Prozessor (10, 20) eine Vorrichtung zu veranlassen, das Verfahren nach einem der Ansprüche 1 bis 10 oder nach Anspruch 12 auszuführen.

15. System (3), umfassend:
- eine Vorrichtung (1) für ein Nutzfahrzeug nach Anspruch 11, und
- eine von dem Nutzfahrzeug separate Vorrichtung (2) nach Anspruch 13.

## Claims

1. Method for setting up a wireless communication path (31) between a first device (1) for a commercial vehicle and a second device (2), the method comprising:
- receiving (401) a communication path request message from the second device at the first device, wherein the communication path request message is received at the first device (1) via a wired communication path (30) between the first device (1) and the second device (2);
- sending (405) a communication path set-up message from the first device (1) to the second device (2), wherein the communication path set-up message is sent via the wired communication path (30) and wherein the communication path set-up message represents one or a plurality of information items to set up the wireless communication path (31) between the first device (1) and the second device (2).

2. Method according to claim 1, the method also comprising:
- determining (402) at least partially based on the communication path request message whether the wireless communication path (31) may be set up between the first device (1) and the second device (2), wherein the communication path set-up message is sent only from the first device (1) to the second device (2), when it is determined that the wireless communication path (31) may be set up between the first device (1) and the second device (2).

3. Method according to claim 2, wherein the communication path request message represents at least one permission certification information item to set up the wireless communication path (31) and wherein the determination whether a wireless communication path (31) may be set up between the first device (1) and the second device (2) comprises checking the permission certification information item.

4. Method according to any one of claims 1 to 3, the method also comprising:
- providing (404) a wireless access point for a wireless communication network, wherein the wireless communication path (31) is set up between the first device and the second device via the wireless communication network.

5. Method according to any one of claims 1 to 4, wherein the communication path set-up message represents at least one of the following information items:
- an identification of a wireless access point and/or a wireless communication network,
- a key for a wireless access point and/or a wireless communication network.

6. Method according to any one of claims 1 to 5, the method also comprising:
- receiving and/or sending usable data via the wireless communication path (31).

7. Method according to claim 6, the method also comprising:
- receiving and/or sending verification data via the wired communication path (30) to verify the usable data received and/or sent via the wireless communication path (31).

8. Method according to any one of claims 1 to 7, wherein the maximum data transmission rate via the wired communication path (30) is lower than the maximum data transmission rate via the wireless communication path (31).

9. Method according to any one of claims 1 to 8, wherein the data transmission takes place via the wired communication path according to one of the following communication standards: Ethernet communication standard, CAN communication standard, K-line communication standard or FlexRay communication standard; and/or wherein the data transmission takes place via the wireless communication path according to one of the following communication standards: WLAN communication standard, Zigbee communication standard or Bluetooth communication standard.

10. Method according to any one of claims 1 to 9, wherein the first device (1) is a telematics unit for a commercial vehicle and wherein the second device (2) is a diagnostic and/or maintenance device.

11. Device, in particular telematics device, for a commercial vehicle, wherein the device is configured to carry out and/or control the method according to any one of claims 1 to 10 or comprising respective means (10-16) to carry out and/or control the steps of the method according to any one of claims 1 to 10.

12. Method for setting up a wireless communication path (31) between a first device (1) for a commercial vehicle and a second device (2), the method comprising:
- sending (501) a communication path request message from the second device (2) to the first device (1), wherein the communication path request message is sent via a wired communication path (30) between the first device (1) and the second device (2);
- receiving (502) a communication path set-up message from the first device (1) at the second device (2), wherein the communication path set-up message is received via the wired communication path (30) and wherein the communication path set-up message represents one or a plurality of information items for setting up the wireless communication path (31) between the first device and the second device.

13. Device wherein the device is configured to carry out and/or control the method according to claim 12 or comprising respective means (20-25) to carry out and/or control the steps of the method according to claim 12.

14. Computer program, comprising program instructions designed, when run by at least one processor (10, 20), to cause a device to carry out the method according to any one of claims 1 to 10 or according to claim 12.

15. System (3), comprising:
- a device (1) for a commercial vehicle according to claim 11 and
- a device (2) separate from the commercial vehicle according to claim 13.

## Revendications

1. Procédé d'établissement d'une voie de communication sans fil (31) entre un premier dispositif (1) pour un véhicule utilitaire et un deuxième dispositif (2), le procédé comprenant :
- la réception (401) d'un message de demande de voie de communication par le deuxième dispositif sur le premier dispositif, dans lequel le message de demande de voie de communication sur le premier dispositif (1) est reçu par l'intermédiaire d'une voie de communication filaire (30) entre le premier dispositif (1) et le deuxième dispositif (2) ;
- l'envoi (405) d'un message d'établissement de voie de communication par le premier dispositif (1) au deuxième dispositif (2), dans lequel le message d'établissement de voie de communication est envoyé par l'intermédiaire de la voie de communication filaire (30), et dans lequel le message d'établissement de voie de communication représente une ou plusieurs informations pour établir la voie de communication sans fil (31) entre le premier dispositif (1) et le deuxième dispositif (2).

2. Procédé selon la revendication 1, le procédé comprenant en outre :
- la détermination (402) au moins en partie sur la base du message de demande de voie de communication pour savoir si l'établissement de la voie de communication sans fil (31) entre le premier dispositif (1) et le deuxième dispositif (2) est autorisé, dans lequel le message d'établissement de voie de communication est envoyé seulement alors par le premier dispositif (1) au deuxième dispositif (2) quand il est déterminé que l'établissement de la voie de communication sans fil (31) entre le premier dispositif (1) et le deuxième dispositif (2) est autorisé.

3. Procédé selon la revendication 2, dans lequel le message de demande de voie de communication représente au moins une information attestant de l'autorisation pour élaborer la voie de communication sans fil (31), et dans lequel la détermination pour savoir si l'établissement d'une voie de communication sans fil (31) entre le premier dispositif (1) et le deuxième dispositif (2) est autorisé comprend la vérification de l'information attestant de l'autorisation.

4. Procédé selon l'une quelconque des revendications 1 à 3, le procédé comprenant en outre :
- la fourniture (404) d'un point d'accès sans fil pour un réseau de communication sans fil, dans lequel la voie de communication sans fil (31) entre le premier dispositif et le deuxième dispositif est établie par l'intermédiaire du réseau de communication sans fil.

5. Procédé selon l'une quelconque des revendications 1 à 4, dans lequel le message d'établissement de voie de communication représente au moins une des informations suivantes :
- un identifiant d'un point d'accès sans fil et/ou d'un réseau de communication sans fil,
- une clé pour un point d'accès sans fil et/ou un réseau de communication sans fil.

6. Procédé selon l'une quelconque des revendications 1 à 5, le procédé comprenant en outre :
- la réception et/ou l'envoi de données utiles par l'intermédiaire de la voie de communication sans fil (31).

7. Procédé selon la revendication 6, le procédé comprenant en outre :
- la réception et/ou l'envoi de données de vérification par l'intermédiaire de la voie de communication filaire (30) pour vérifier les données utiles reçues et/ou envoyées par l'intermédiaire de la voie de communication sans fil (31).

8. Procédé selon l'une quelconque des revendications 1 à 7, dans lequel la vitesse de transfert de données maximale par l'intermédiaire de la voie de communication filaire (30) est inférieure à la vitesse de transfert de données maximale par l'intermédiaire de la voie de communication sans fil (31).

9. Procédé selon l'une quelconque des revendications 1 à 8, dans lequel le transfert de données par l'intermédiaire de la voie de communication filaire est effectué conformément à l'un des protocoles de communication suivants : protocole de communication Ethernet, protocole de communication CAN, protocole de communication sur la ligne K ou protocole de communication FlexRay ; et/ou dans lequel le transfert de données par l'intermédiaire de la voie de communication sans fil est effectué conformément à l'un des protocoles de communication suivants : protocole de communication WLAN, protocole de communication Zigbee ou protocole de communication Bluetooth.

10. Procédé selon l'une quelconque des revendications 1 à 9, dans lequel le premier dispositif (1) est une unité télématique pour un véhicule utilitaire, et dans lequel le deuxième dispositif (2) est un dispositif de diagnostic et/ou de maintenance.

11. Dispositif, en particulier dispositif télématique, pour un véhicule utilitaire, dans lequel le dispositif est mis au point pour exécuter et/ou commander le procédé selon l'une quelconque des revendications 1 à 10, comprenant des moyens (10 - 16) respectifs pour exécuter et/ou commander les étapes du procédé selon l'une quelconque des revendications 1 à 10.

12. Procédé d'établissement d'une voie de communication sans fil (31) entre un premier dispositif (1) pour un véhicule utilitaire et un deuxième dispositif (2), le procédé comprenant :
- l'envoi (501) d'un message de demande de voie de communication par le deuxième dispositif (2) au premier dispositif (1), dans lequel le message de demande de voie de communication est envoyé par l'intermédiaire d'une voie de communication filaire (30) entre le premier dispositif (1) et le deuxième dispositif (2) ;
- la réception (502) d'un message d'établissement de voie de communication par le premier dispositif (1) sur le deuxième dispositif (2), dans lequel le message d'établissement de voie de communication est reçu par l'intermédiaire de la voie de communication filaire (30), et dans lequel le message d'établissement de voie de communication représente une ou plusieurs informations pour établir la voie de communication sans fil (31) entre le premier dispositif et le deuxième dispositif.

13. Dispositif, dans lequel le dispositif est mis au point pour exécuter et/ou commander le procédé selon la revendication 12 ou comprenant des moyens (20 - 25) respectifs pour exécuter et/ou commander les étapes du procédé selon la revendication 12.

14. Programme informatique, comprenant des instructions de programme, qui sont réalisées pour, lors de l'exécution par au moins un processeur (10, 20), amener un dispositif à exécuter le procédé selon l'une quelconque des revendications 1 à 10 ou selon la revendication 12.

15. Système (3) comprenant :
- un dispositif (1) pour un véhicule utilitaire selon la revendication 11, et
- un dispositif (2) séparé du véhicule utilitaire selon la revendication 13.
